(19) 

Europäisches
Patentamt
European
Patent Office
Office européen
des brevets

(11) **EP 2 525 576 A1**

(12) **EUROPEAN PATENT APPLICATION**
published in accordance with Art. 153(4) EPC

(43) Date of publication:
**21.11.2012 Bulletin 2012/47**

(51) Int Cl.:
***H04N 7/32*** *(2006.01)*

(21) Application number: **10843189.1**

(22) Date of filing: **24.12.2010**

(86) International application number:
**PCT/JP2010/073436**

(87) International publication number:
**WO 2011/086836 (21.07.2011 Gazette 2011/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2010 JP 2010004432**

(71) Applicant: **Sharp Kabushiki Kaisha
Osaka-shi, Osaka 545-8522 (JP)**

(72) Inventors:
- **YASUGI, Yukinobu
  Osaka-shi, Osaka 545-8522 (JP)**
- **IKAI, Tomohiro
  Osaka-shi, Osaka 545-8522 (JP)**

(74) Representative: **Müller - Hoffmann & Partner
Patentanwälte
Innere Wiener Strasse 17
81667 München (DE)**

(54) **ENCODER APPARATUS, DECODER APPARATUS, AND DATA STRUCTURE**

(57)     An encoding device of the present embodiment includes: an adaptive filter (100) configured to act on a reference image obtained by encoding and reconfiguring an input image; and a prediction image generating section (16a) for generating a first prediction image, the prediction image generating section (16a) generating a second filter configured to act on the reference image and a second prediction image by carrying out motion compensation with reference to an output image obtained through the second filter, and the adaptive filter (100) dividing the first prediction image into a plurality of regions and setting a filter coefficient of the second filter so that a difference between the input image and the first prediction image is minimized for each of the plurality of regions.

FIG. 1

**EP 2 525 576 A1**

## Description

Technical Field

The present invention relates to a video encoding device for encoding video so as to generate encoded data. The present invention relates also to a video decoding device for decoding the encoded data thus generated by the video encoding device.

Background Art

A video encoding device is used to efficiently transmit or record video. Specific examples of a video encoding method include H.264/MPEG-4 AVC and a method adopted in KTA software which is a codec for joint development in VCEG (Video Coding Expert Group).

According to such an encoding method, an image (picture) constituting video is managed as a hierarchical structure constituted by slices obtained by dividing the image, macroblocks obtained by dividing a slice, and blocks obtained by dividing a macroblock. Such an image is generally encoded for each of the blocks.

According to such an encoding method, a method of encoding a difference (prediction difference) between an input image and a prediction image is used. Specifically, (i) a motion vector is found on the basis of an input image and a locally decoded image obtained by quantizing/ inverse quantizing the input image, (ii) a prediction image is generated by carrying out motion compensation with the use of the motion vector, and (iii) a prediction difference between the prediction image and the input image is encoded.

Patent Literature 1 discloses an adaptive filtering method for a reference image. In the adaptive filtering method disclosed in Patent Literature 1, (i) a first motion vector is found on the basis of an input image and a locally decoded image, (ii) a filter for the locally decoded image is generated so that a difference between the input image and an image obtained by carrying out motion compensation with respect to a reference image with the use of the first vector is minimized, which reference image is obtained by filtering the locally decoded image, (iii) the reference image is generated by filtering the locally decoded image with the use of the filter, (iv) a second motion vector is found on the basis of the input image and the reference image, and (v) a prediction image is generated by carrying out motion compensation with respect to the reference image with the use of the second motion vector.

According to this method, a filter can be adaptively generated so that a difference between the input image and the image obtained by carrying out motion compensation with respect to the reference image with the use of the first motion vector is minimized. Accordingly, the prediction difference between the prediction image and the input image tends to become smaller, as compared with a case where only a fixed filter is used.

Citation List

Patent Literature 1

Japanese Patent Application Publication, Tokukai, No. 2006-135376 A (Publication Date: May 25, 2006)

Summary of Invention

Technical Problem

However, according to the above method, a filter for the entire locally decoded image is generated. This undesirably makes it difficult to carry out appropriate filtering in a case where regions of the locally decoded image are not uniform in image characteristics.

The present invention was attained in view of the above problems, and an object of the present invention is to provide an encoding device including a filter which makes it possible to carry out appropriate filtering even in a case where regions of the locally decoded image are not uniform in image characteristics.

Solution to Problem

In order to attain the object, an encoding device of the present invention includes: a first filter configured to act on a reference image obtained by encoding and reconfiguring an input image; first predicting means for generating a first prediction image by carrying out motion compensation with reference to an output image obtained through the first filter; a second filter configured to act on the reference image; second predicting means for generating a second prediction image by carrying out motion compensation with reference to an output image obtained through the second filter; dividing means for dividing each of the first prediction image and the input image into a plurality of regions; and filter coefficient setting means for setting a filter coefficient of the second filter so that a difference between the input image and the first prediction image is minimized for each of the plurality of regions, the encoding device encoding residual data indicative of a difference between the input image and the second prediction image.

According to the encoding device of the present invention thus configured, the encoding device includes (i) the dividing means for dividing each of the first prediction image and the input image into a plurality of regions and (ii) the filter coefficient setting means for setting a filter coefficient of the second filter so that a difference between the input image and the first prediction image is minimized for each of the plurality of regions. With the configuration, it is possible to adaptively set the filter coefficient of the second filter for each of the plurality of regions, even in a case where the regions of the first prediction image are not uniform in characteristics.

In other words, even in a case where the reference image (locally decoded image), based on which the first prediction image is generated, has nonuniform characteristics, it is possible to appropriately carry out filtering by adaptively setting the filter coefficient of the second filter for each of the plurality of regions.

Another encoding device of the present invention includes: a first filter configured to act on a plurality of reference images obtained by encoding and reconfiguring an input image; first predicting means for generating a first prediction image by carrying out motion compensation with reference to an output image obtained through the first filter; a second filter configured to act on the plurality of reference images; and second predicting means for generating a second prediction image by carrying out motion compensation with reference to an output image obtained through the second filter; said encoding device encoding residual data indicative of a difference between the input image and the second prediction image, in a case where a reference image, out of the plurality of reference images, belonging to a first reference image list has a weight of contribution to the first prediction image which weight is equal to or heavier than a predetermined weight, the second filter filtering the reference image which belongs to the first reference image list with use of a filter coefficient which has been set so that a difference between the input image and the first prediction image is minimized, and in a case where the reference image belonging to the first reference image list has a weight of contribution to the first prediction image which weight is lighter than the predetermined weight, the second filter filtering a reference image which belongs to a second reference image list with use of a predetermined filter coefficient, the second reference image list being different from the first reference image list.

In general, as a weight of contribution of a reference image with respect to a prediction image becomes smaller, it becomes less advantageous to carry out adaptive filtering on the reference image. In other words, as a weight of contribution of a reference image with respect to a prediction image becomes smaller, it becomes more likely that a disadvantage caused by adaptive filtering, i.e., increase in calculation cost and in code amount required for a filter coefficient, surpasses an advantage brought about by the adaptive filtering, i.e., improvement in encoding efficiency.

According to the configuration, (i) adaptive filtering is carried out on only a reference image whose weight of contribution to the first prediction image is heavier than the predetermined weight and (ii) filtering with the use of the predetermined filter coefficient is carried out on a reference image whose weight of contribution to the first prediction image is lighter than the predetermined weight. This makes it possible to carry out appropriate filtering, without causing disadvantageous increase in calculation cost.

Moreover, according to the configuration, in a case where the reference image belonging to the first reference image list has a weight of contribution to the first prediction image which weight is lighter than the predetermined weight, filtering can be carried out on a reference image, which belongs to the second reference image list, with use of the predetermined filter coefficient. This allows a reference list number to serve as a flag indicating whether an adaptively obtained filter coefficient or a nonadaptive filter coefficient is to be used. With the configuration of the present invention, it is therefore possible to carry out filtering more appropriately, without causing increase in code amount due to additional side information.

A decoding device of the present invention is a decoding device for decoding encoded data obtained by encoding, together with a filter coefficient group, residual data indicative of a difference between an original image and a prediction image, the decoding device including: filtering means for filtering a reference image so as to generate a filtered reference image, the reference image being generated based on a prediction residual obtained by decoding the residual data, the filtering means having a filter coefficient switchable for each unit region of the reference image; prediction image generating means for generating the prediction image by carrying out motion compensation with respect to the filtered reference image; and filter coefficient selecting means for selecting, for each unit region of the reference image, any of (i) a filter coefficient included in the filter coefficient group and (ii) a predetermined filter coefficient.

According to the decoding device of the present invention thus configured, the decoding device includes (i) the filtering means for filtering the reference image so as to generate the filtered reference image, the reference image being generated based on the prediction residual obtained by decoding the residual data, the filtering means having a filter coefficient switchable for each unit region of the reference image, (ii) the prediction image generating means for generating the prediction image by carrying out motion compensation with respect to the filtered reference image, and (iii) the filter coefficient selecting means for selecting, for each unit region of the reference image, any of (a) a filter coefficient included in the filter coefficient group and (b) a predetermined filter coefficient. This makes it possible to carry out filtering with the use of a more appropriate filter coefficient for each unit region of the reference image.

In a data structure of encoded data of the present invention, the encoded data is obtained by encoding, together with a filter coefficient group, residual data which is indicative of a difference between an original image and a prediction image which has been generated from the original image; and the filter coefficient group includes a filter coefficient which is selected for each unit region of a reference image, the reference image being generated based on a prediction residual obtained as a result of decoding of the residual data in a decoding device for decoding the encoded data.

The data structure of the encoded data thus configured includes the filter coefficient which is selected for each unit region of the reference image generated based on the prediction residual which is obtained as a result of decoding of the residual data in the decoding device for decoding the encoded data. This allows the decoding device to carry out filtering more appropriately for each unit region of the reference image.

Advantageous Effects of Invention

As above described, the encoding device of the present invention includes: a first filter configured to act on a reference image obtained by encoding and reconfiguring an input image; first predicting means for generating a first prediction image by carrying out motion compensation with reference to an output image obtained through the first filter; a second filter configured to act on the reference image; second predicting means for generating a second prediction image by carrying out motion compensation with reference to an output image obtained through the second filter; dividing means for dividing each of the first prediction image and the input image into a plurality of regions; and filter coefficient setting means for setting a filter coefficient of the second filter so that a difference between the input image and the first prediction image is minimized for each of the plurality of regions, the encoding device encoding residual data indicative of a difference between the input image and the second prediction image.

With the configuration, even in a case where the plurality of regions of the reference image (locally decoded image) are not uniform in image characteristics, it is possible to carry out appropriate filtering.

For a fuller understanding of the other objects, natures, excellent points, and advantages of the present invention, reference should be made to the ensuing detailed description taken in conjunction with the accompanying drawings.

Brief Description of Drawings

Fig. 1

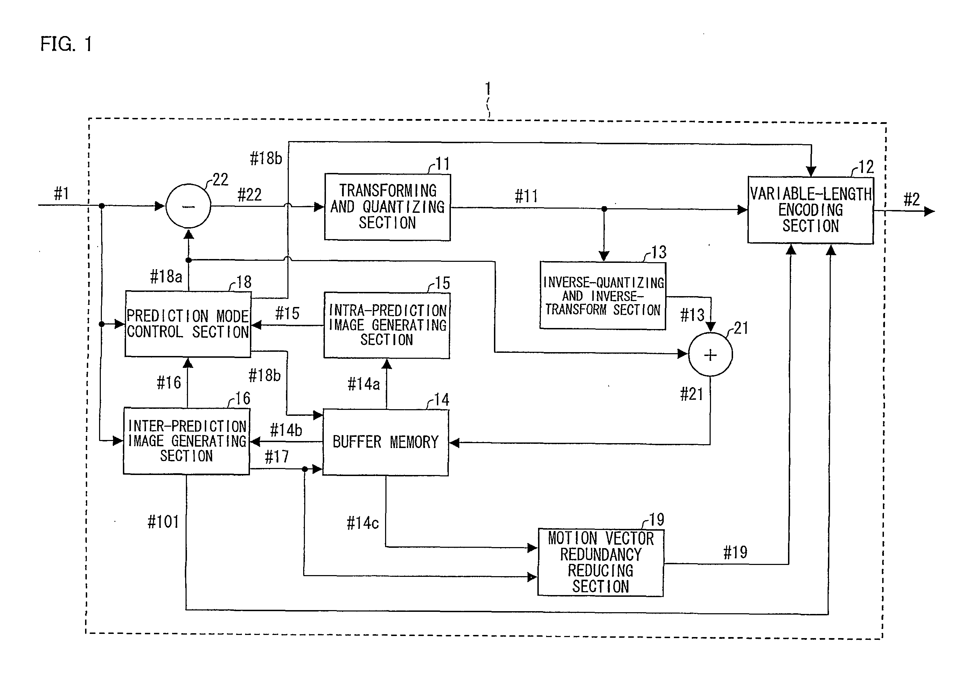

Fig. 1 is a block diagram illustrating a configuration of an encoding device of an embodiment.
Fig. 2

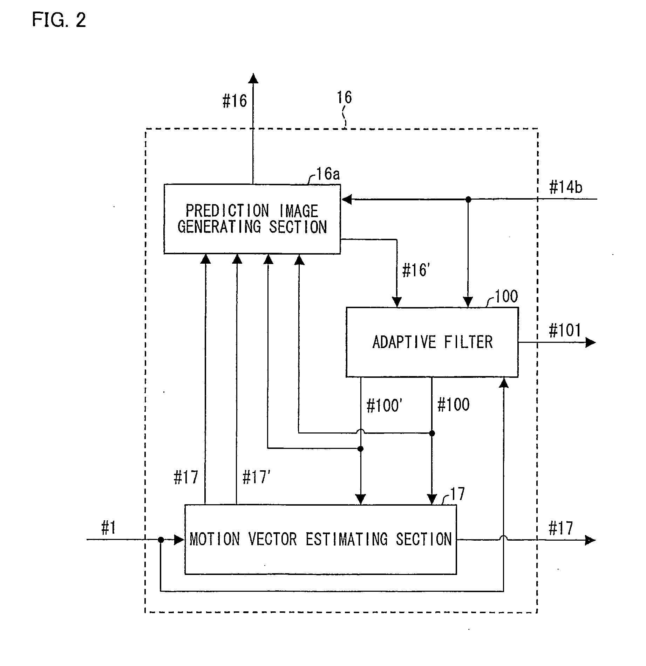

Fig. 2 is a block diagram illustrating a configuration of an inter-prediction image generating section provided in the encoding device of the embodiment.
Fig. 3

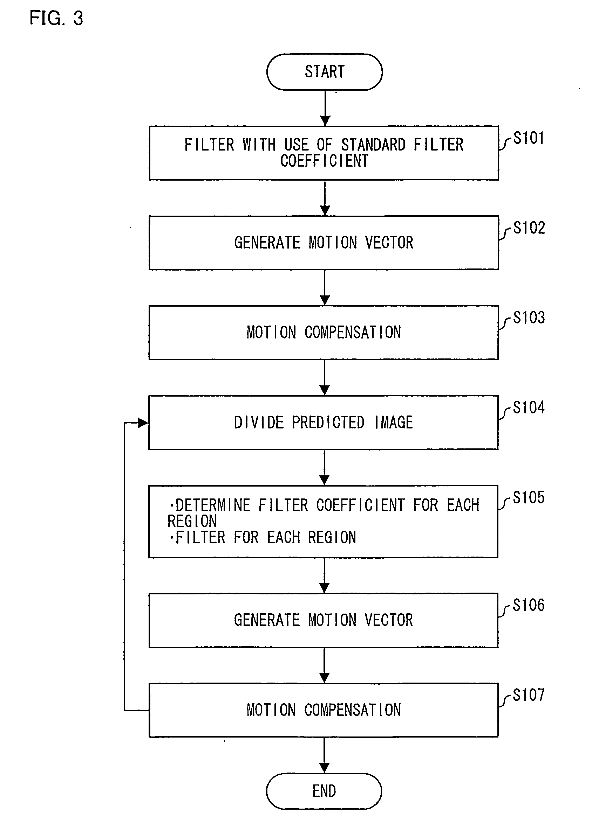

Fig. 3 is a flow chart showing a flow of an operation of the inter-prediction image generating section provided in the encoding device of the embodiment.
Fig. 4

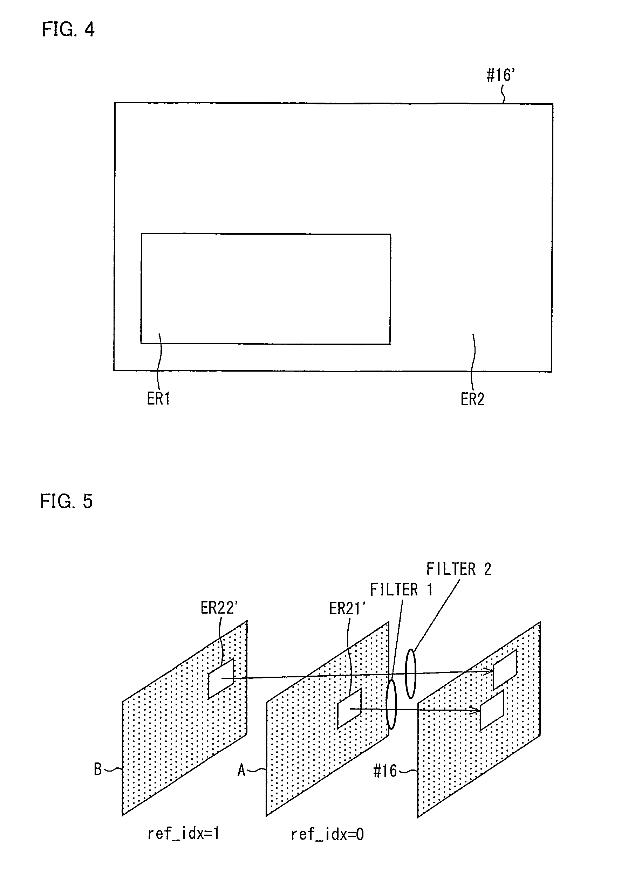

Fig. 4 is a diagram for explaining an exemplary operation of the inter-prediction image generating section provided in the encoding device of the embodiment, and illustrates an example of a first region and a second region in a first prediction image.
Fig. 5
Fig. 5 is a diagram for explaining an exemplary operation of the inter-prediction image generating section provided in the encoding device of the embodiment, and illustrates a case where a region of a reference picture of a reference image which reference picture has a reference image index of 0 and a region of a reference picture of the reference image which reference image has a reference image index of 1 are filtered.
Fig. 6

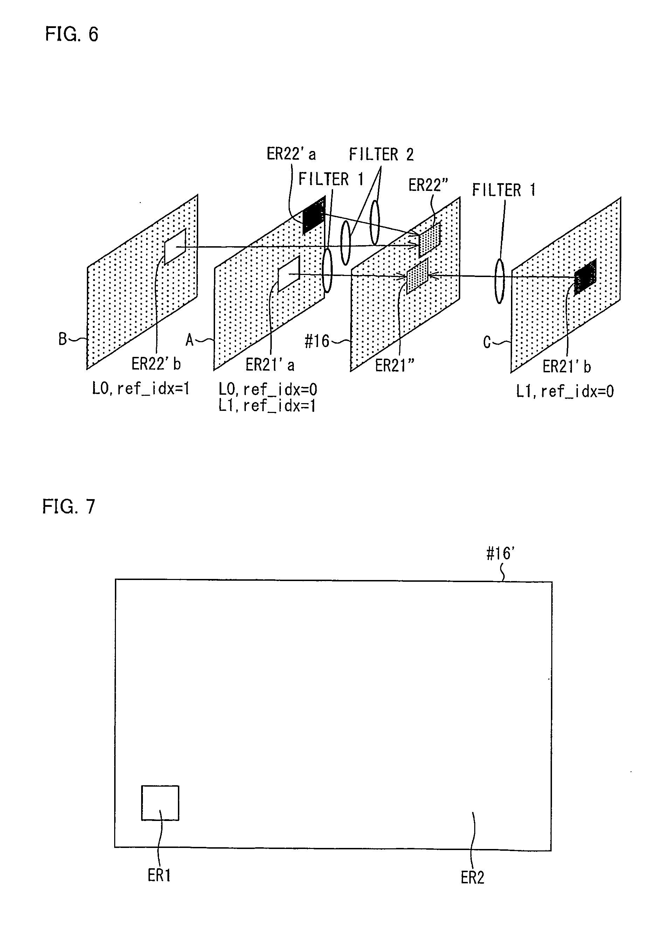

Fig. 6 is a diagram for explaining an exemplary operation of the inter-prediction image generating section provided in the encoding device of the embodiment, and illustrates a case where filtering is carried out with respect to (i) a region of a reference picture which is designated by a reference image index 0 in a reference image list L0 and which is also designated by a reference image index 1 in a reference image list L1, (ii) a region of a reference picture designated by a reference image index 1 in the reference image list L0, and (iii) a region of a reference picture designated by a reference image index 0 in the reference image list L1.
Fig. 7
Fig. 7, which is for explaining an exemplary operation of the inter-prediction image generating section provided in the encoding device of the embodiment, is a diagram illustrating an example of the first region and the second region in the first prediction image and illustrating a case where an area of the first region is small.

Fig. 8

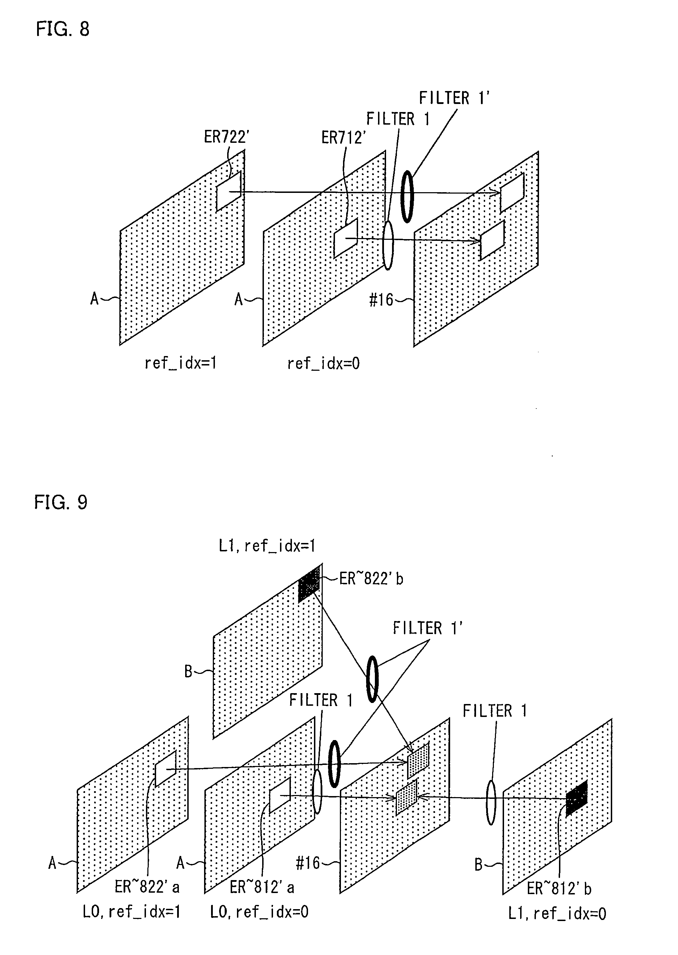

Fig. 8, which is for explaining an exemplary operation of the inter-prediction image generating section provided in the encoding device of the embodiment, is a diagram illustrating a case where filtering is carried out with respect to (i) a region of a reference picture of a reference image which reference picture has a reference image index of 0 and (ii) another region of the reference picture of the reference image which reference picture has a reference image index of 0.

Fig. 9

Fig. 9, which is for explaining an exemplary operation of the inter-prediction image generating section provided in the encoding device of the embodiment, is a diagram illustrating a case where filtering is carried out with respect to (i) a region of a reference picture designated by a reference image index 0 in a reference image list L0, (ii) a region of a reference picture designated by a reference image index 1 in the reference image list L0, (iii) a region of a reference picture designated by a reference image index 0 in a reference image list L1, and (iv) a region of a reference picture designated by a reference image index 1 in the reference image list L1 out of a reference image.

Fig. 10

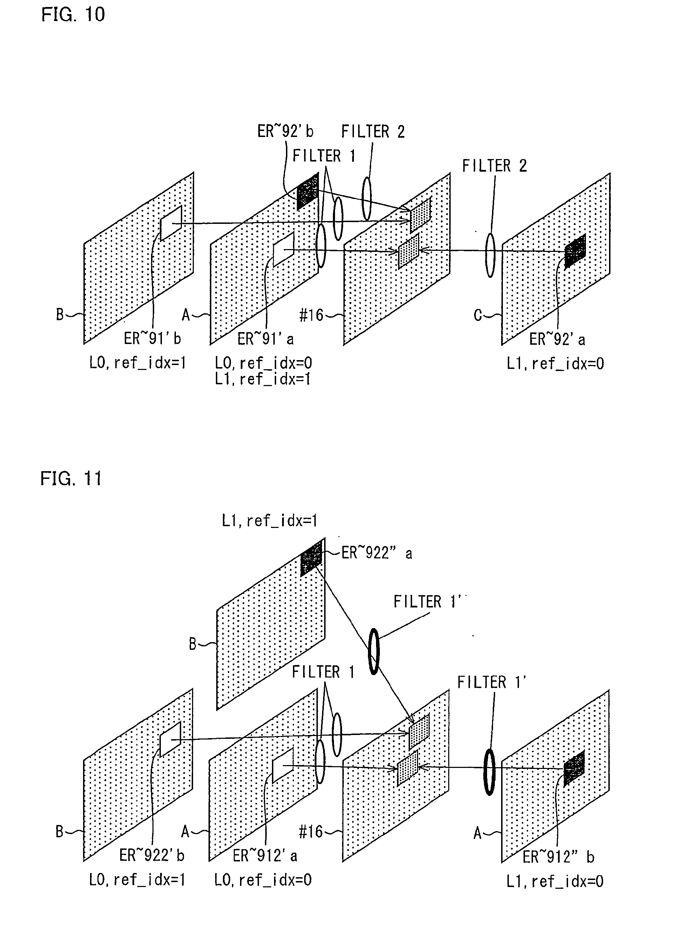

Fig. 10, which is for explaining another exemplary operation of the inter-prediction image generating section provided in the encoding device of the embodiment, is a diagram illustrating a case where filtering is carried out with respect to (i) a region of a reference picture which is designated by a reference image index 0 in a reference image list L0 and which is designated also by a reference image index 1 in a reference image list L1, (ii) a region of a reference picture designated by a reference image index 1 in a reference image list L0, and (iii) a region of a reference picture designated by a reference image index 0 in a reference image list L1 out of a reference image.

Fig. 11

Fig. 11, which is for explaining another exemplary operation of the inter-prediction image generating section provided in the encoding device of the embodiment, is a diagram illustrating a case where filtering is carried out with respect to (i) a region of a reference picture designated by a reference image index 0 in a reference image list L0, (ii) a region of a reference picture designated by a reference image index 1 in a reference image list L0, (iii) a region of a reference picture designated by a reference image index 0 in a reference image list L1, and (iv) a region of a reference picture designated by a reference image index 1 in a reference image list L1 out of a reference image.

Fig. 12

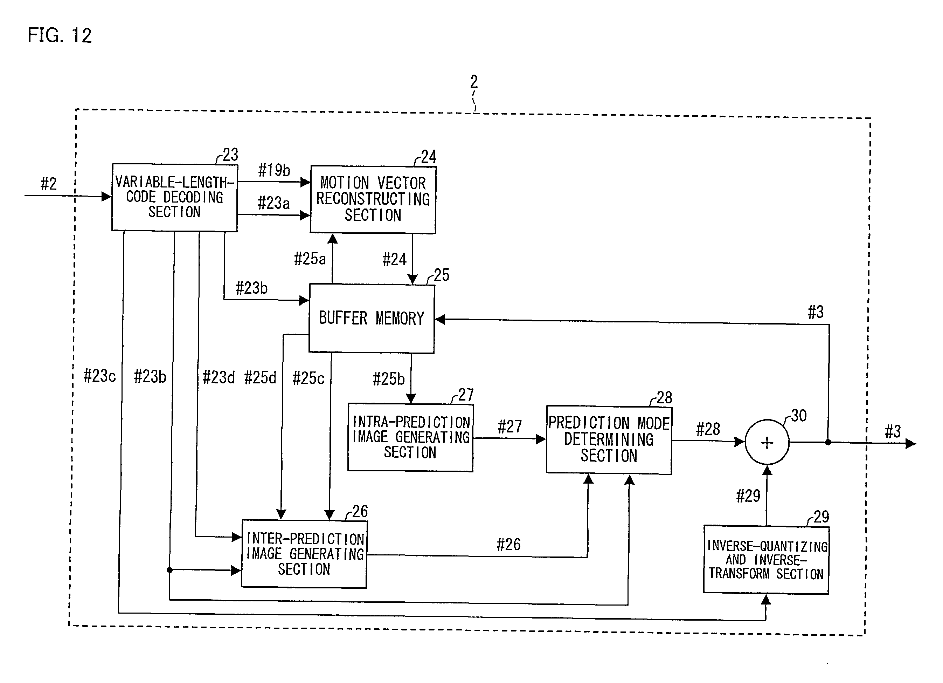

Fig. 12 is a block diagram illustrating a configuration of a decoding device of the embodiment.

Fig. 13

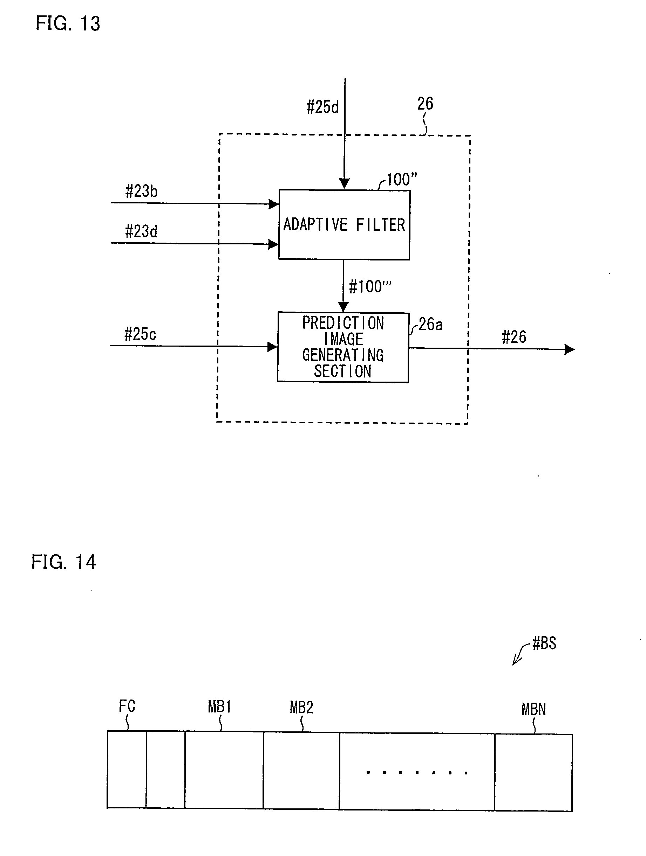

Fig. 13 is a block diagram illustrating a configuration of an inter-prediction image generating section provided in the decoding device of the embodiment.

Fig. 14

Fig. 14 is a diagram illustrating a bitstream of encoded data supplied to the decoding device of the embodiment.

Description of Embodiments

The present invention is described below in more detail with reference to Examples. However, the present invention is not limited to these Examples.

The following description will discuss a configuration of a video encoding device 1 according to the present embodiment with reference to Figs. 1 and 2. The video encoding device 1 is a video encoding device part of which uses the H.264/AVC standard and the technique used in KTA software.

Fig. 1 is a block diagram illustrating the configuration of the video encoding device 1.

As illustrated in Fig. 1, the video encoding device 1 includes a converting and quantizing section 11, a variable-length encoding section 12, an inverse-quantizing and inverse-converting section 13, a buffer memory 14, an intra-prediction image generating section 15, an inter-prediction image generating section 16, a prediction mode control section 18, a motion vector redundancy reducing section 19, an adder 21, and a subtractor 22.

The video encoding device 1 receives an input image #1 which has been divided into block images (hereinafter, referred to as "macroblocks") each made up of a plurality of adjacent pixels.

The video encoding device 1 encodes the input image #1, and then outputs encoded data #2.

The converting and quantizing section 11 generates quantized prediction residual data #11 by (i) converting a difference image #22 into a frequency component by means of DCT (discrete cosine transform) and (ii) quantizing the frequency component. Note that the difference image #22 is a difference image between the input image #1 which has been divided into the macroblocks and a prediction image #18a supplied from the prediction mode control section 18 (described later). The term "quantizing" means calculation of associating the frequency component with an integer value. The DCT and the quantization are carried out for each partitions obtained by dividing each of the macroblocks. Hereinafter, a macroblock to be processed is referred to as a "target macroblock", and a partition to be processed is referred to as a "target partition".

The inverse-quantizing and inverse-converting section 13 generates a prediction residual #13 by decoding the quantized prediction residual data #11. Specifically, the inverse-quantizing and inverse-converting section 13 generates the prediction residual #13 by (i) inverse-quantizing the quantized prediction residual data #11, i.e., associating integer values constituting the quantized prediction residual data #11 with frequency components and (ii) carrying out inverse DCT of the frequency components, i.e., carrying out inverse conversion of the frequency components into pixel components of a target macroblock.

The adder 21 generates a decoded image #21 by adding the prediction residual #13 and the prediction image #18a together. The decoded image #21 thus generated is supplied to the buffer memory 14.

The intra-prediction image generating section 15 generates an intra-prediction image #15 by (i) extracting a locally decoded image #14a (a decoded region in a frame which includes the target macroblock) from the decoded image #21 stored in the buffer memory 14 and (ii) performing intra-frame prediction based on the locally decoded image #14a.

The inter-prediction image generating section 16 calculates a motion vector #17 by use of a reference image #14b for which a whole frame has been already decoded and which is stored in the buffer memory 14, and then allocates the motion vector #17 thus calculated to a target partition of the input image #1. The motion vector #17 thus calculated is supplied to the prediction image generating section 16 and to the motion vector redundancy reducing section 19, and is stored in the buffer memory 14. Further, the inter-prediction image generating section 16 generates an inter-prediction image #16 by carrying out motion compensation based on the motion vector #17 with respect to individual partitions of the reference image #14b. The inter-prediction image generating section 16 supplies, to the variable-length encoding section 12, a filter coefficient #101 which has been used for a filtering process. A detailed configuration of the inter-prediction image generating section 16 will be described later, and therefore the description thereof is omitted.

The prediction mode control section 18 (i) compares the intra-prediction image #15, the inter-prediction image #16, and the input image #1 with one another in the unit of macroblock, (ii) selects one of the intra-prediction image #15 and the inter-prediction image #16, and (iii) outputs the selected one as a prediction image #18a. Further, the prediction mode control section 18 outputs a prediction mode #18b which is information indicative of which one of the intra-prediction image #15 and the inter-prediction image #16 the prediction mode control section 18 has selected. The prediction image # 18a is supplied to the subtractor 22.

The prediction mode #18b is stored in the buffer memory 14 and supplied to the variable-length encoding section 12.

After the inter-prediction image generating section 16 allocates the motion vector #17 to the target partition, the motion vector redundancy reducing section 19 calculates a predictive vector on the basis of a motion vector group #14c which is stored in the buffer memory 14 and which includes motion vectors allocated to the other partitions. Further, the motion vector redundancy reducing section 19 calculates a difference between the predictive vector and the motion vector #17 so as to generate a differential motion vector #19. The differential motion vector #19 thus generated is supplied to the variable-length encoding section 12.

The variable-length encoding section 12 carries out variable-length encoding with respect to the quantized prediction residual data #11, the differential motion vector #19, the prediction mode #18b, and the filter coefficient #101 so as to generate the encoded data #2.

The subtractor 22 finds a difference between the input image #1 and the prediction image #18a for a target macroblock and outputs the difference image #22.

(Inter-Prediction Image Generating Section 16)

The following description will discuss a configuration and an operation of the inter-prediction image generating section 16 with reference to Fig. 2 through Fig. 4.

Fig. 2 is a block diagram illustrating a configuration of the inter-prediction image generating section 16.

As illustrated in Fig. 2, the inter-prediction image generating section 16 includes a prediction image generating section 16a, a motion vector estimating section 17, and an adaptive filter 100.

Fig. 3 is a flow chart showing a flow of an operation of the inter-prediction image generating section 16.

The following description will discuss examples of operations of the respective sections of the inter-prediction image generating section 16 with reference to Fig. 3 and Fig. 4.

(Operation Example 1)

(Step 101)

The reference image #14b stored in the buffer memory 14 is supplied to the adaptive filter 100. In a case where a plurality of reference pictures are used in a step 102 (described later), the reference image #14b is made up of the plurality of reference pictures.

In the step 101, the adaptive filter 100 carries out a filtering process, with respect to the reference image #14b, on the basis of a predetermined filter coefficient (hereinafter, referred to as a "standard filter coefficient"), and outputs first output image data #100.

Specifically, the adaptive filter 100 calculates a pixel value So(x', y') in a coordinate (x', y') of the first output image data #100 by use of a weighted linear sum represented by Formula (1). Note that the adaptive filter 100 does not necessarily generate and output whole output image data at a time, and may be configured to generate and output a partial region of the output image data on the basis of requests from the motion vector estimating section and the prediction image generating section.

$$ S_O(x', y') = \left( \sum_{(i,j) \in R} h(i, j) S_I(x + i, y + j) \right) + h_{offset} \qquad (1) $$

$S_I(x, y)$ represents a pixel value in a coordinate (x, y) of the reference image #14b, and h(i, j) represents a filter coefficient which is to be multiplied by a pixel value SI(x+i, y+j). Further, R represents a region (hereinafter, referred to as a "filter region") of pixels for which the weighted linear sum is found. More specifically, R represents a set of relative coordinates to be subjected to the weighted linear sum. For example, in a case where filtering having $3 \times 3$ tap centered on a pixel at the coordinate (x, y) is carried out, the following is met: R = {(-1, -1), (-1, 0), (-1, 1), (0, -1), (0, 0), (0, 1), (1, -1), (1, 0), (1, 1)}. Furthermore, $h_{offset}$ represents an offset value to be added to the pixel value.

Generally, the filter region R may be a rectangular region of $M \times N$ tap, or may be arhombus, circle, or any other shapes.

The reference image #14b is image data made up of pixel values of pixels at integer coordinates (hereinafter, referred to as "integer pixels"). That is, x and y are both integer values in Formula (1). Meanwhile, x' and y' do not need to be integers. That is, the first output image data #100 is image data having (A) pixel values of integer pixels and (B) an interpolation signal having pixel accuracy which is equal to or lower than that of the integer pixels. To put it another way, the adaptive filter 100 is an image filter which generates, on the basis of the pixel values of the integer pixels, an interpolation signal having the pixel accuracy which is equal to or lower than that of the integer pixels by carrying out interpolation.

Note that the adaptive filter 100 appropriately changes a filter coefficient and offset in accordance with a coordinate value of a pixel to be obtained by a filtering process. For example, in a case where each of x' and y' is a value of a coordinate position corresponding to any of four kinds of pixels, i.e., an integer pixel, a 1/4 pixel, a 1/2 pixel, and a 3/4 pixel, the adaptive filter 100 changes a filter coefficient and offset in accordance with a combination of the coordinate positions of x' and y'. Hereinafter, it is assumed that the filter coefficient h(i, j) and the offset $h_{offset}$ respectively include filter coefficients and offsets corresponding to combinations of the coordinate values of x' and y' and that appropriate filter coefficient and offset are appropriately selected and used.

In the step 101, the filter coefficient h(i, j) and the offset $h_{offset}$ are predetermined values.

For example, a filter coefficient which is used for an interpolating filter of the H.264/AVC standard can be used, although the present invention is not limited to a specific value of the standard filter coefficient.

(Step 102)

The motion vector estimating section 17 carries out motion prediction based on the first output image data #100 and the input image #1 so as to generate a first motion vector #17'. Note that, in the motion prediction in the step 102, the plurality of reference pictures included in the reference image #14b may be used.

(Step 103)

The prediction image generating section 16a carries out motion compensation based on the first motion vector #17' with respect to the first output image data #100, thereby generating a first prediction image #16'. Note that the processes in the step 102 and the step 103 are carried out for each of prediction modes which are different from each other in prediction method, and an optimum prediction mode is used.

(Step 104)

The adaptive filter 100 divides the first prediction image #16' into a first region ER1 made up of macroblocks to which a skip mode is applied and a second region ER2 made up of macroblocks to which the skip mode is not applied.

Fig. 4 is a diagram illustrating an example of the first region ER1 and the second region ER2 of the first prediction image # 16'.

Further, the adaptive filter 100 divides the input image #1 into a region ER1' corresponding to the first region ER1 and a region ER2' corresponding to the second region ER2. Further, the adaptive filter 100 (i) sets, as a region ER~1', a region of the reference image #14b which region corresponds to the region ER1' and is referred to for prediction of the region ER1' and (ii) sets, as a region ER~2', a region of the reference image #14b which region corresponds to the region ER2' and is referred to for prediction of the region ER2'. Note that the region ER~1' and the region ER~2' do not need to be regions into which the reference image #14b is divided. That is, in some cases, the region ER~1' and the region ER~2' overlap each other.

(Step 105)

The adaptive filter 100 (i) filters, on the basis of the filter coefficient h1'(i, j), the region ER~1' of the reference image #14b and (ii) filters, on the basis of the filter coefficient h2'(i, j), the region ER~2' of the reference image #14b. As described above, in some cases, the region ER~1' and the region ER~2' overlap each other in the reference image #14b. However, it is possible to determine whether an overlapping region is referred to as the region ER~1' or the region ER~2', on the basis of which one of the regions ER1' and ER2' the overlapping region is referred to by.

The filter coefficient h1'(i, j) is determined so that a difference between the region ER1 of the first prediction image #16' and a corresponding region of the input image #1 is minimized. Further, the filter coefficient h2'(i, j) is determined so that a difference between the region ER2 of the first prediction image #16' and a corresponding region of the input image #1 is minimized.

Note that, in order to change the filter coefficient h1'(i, j) and the filter coefficient h2'(i, j) in accordance with a position of a pixel having accuracy smaller than that of an integer pixel in the motion vector as described above, the filter coefficients are found for each of combination of pixel accuracy smaller than an integer pixel in the motion vectors #17'.

Further, a statistical method can be used to determine a specific filter coefficient hk'(i, j)(k = 1, 2).

For example, the filter coefficient hk'(i, j)(k = 1, 2) can be determined so that a square error Ek obtained from the following formula (2) is minimized.

$$E_k = \sum_{(x,y)\in ERk} \left( S(x,y) - \sum_{(i,j)\in R'} h_k{}'(i,j) S_I(\tilde{x}+i,\tilde{y}+j) \right)^2 \qquad (2)$$

S (x, y) represents a pixel value at a coordinate (x, y) of the input image #1, and $S_I$ (x~+i, y~+j) represents a pixel value at a coordinate (x~+i, y~+j) of the first prediction image #16'. x~ and y~ are defined by x~ = x + f(mvx) - FOx and y~ = y + f(mvy) - FOy, respectively. mvx and mvy are an x component and a y component of the first motion vector #17', respectively. f(mvx) is a floor function which maps an mvx to a largest integer pixel which does not exceed mvx. The same applies to f(mvy). FOx and FOy are filter offsets which are defined as FOx = (filter size in an x-direction) / 2 - 1 and FOy = (filter size in a y-direction) / 2 - 1, respectively. For example, in a case of filtering having M × N tap, the filter size in the x-direction is M and the filter size in the y-direction is N.

Further, a sum of values of a coordinate (x, y) in the formula (2) is a sum of all pixels included in a region ERk ("k" is 1 or 2) of the first prediction image #16'.

As described above, the adaptive filter 100 generates and outputs second output image data #100' by carrying out, with respect to each of the regions of the reference image #14b, a filtering process based on filter coefficients optimized for the respective regions.

Although the above description has dealt with an example in which the square error Ek is minimized, the present invention is not limited to this. For example, a filter coefficient may be determined so that an absolute value error obtained by replacing the squaring operation in the above formula 2 for finding the square error E with an absolute value operation is minimized. Alternatively, the filter coefficient may be determined by weighted errors.

The filter coefficient hk'(i, j)(k = 1, 2) is supplied, as the filter coefficient #101, to the variable-length encoding section 12.

Note that the operation of the adaptive filter 100 in the step 105 can be also expressed as follows.

That is, the adaptive filter 100 divides a prediction difference between the first prediction image #16' and the input image #1 into (i) a prediction difference E1 for a region of the input image #1 which region corresponds to the macroblocks, in the first prediction image #16', to which the skip mode is applied and (ii) a prediction difference E2 for a region of the input image #1 which region corresponds to the macroblocks, in the first prediction image #16', to which the skip mode is not applied, and the adaptive filter 100 determines the filter coefficient hk'(i, j)(k = 1, 2) so that the prediction differences E1 and E2 are minimized.

(Step 106)

Next, the motion vector estimating section 17 generates a second motion vector #17 on the basis of the second output image data #100' and the input image #1. In the present operation example, it is assumed that the motion vector estimating section 17 outputs, as the second motion vector #17, a value equal to that of the first motion vector #17' which has been already calculated. This makes it possible to reduce a calculation cost for calculating the second motion vector #17. Note, however, that the present invention is not limited to this relationship between the second motion vector #17 and the first motion vector #17'.

(Step 107)

The prediction image generating section 16a generates and outputs the inter-prediction image #16 by carrying out the motion compensation based on the second motion vector #17 with respect to the second output image data #100'.
The flow of the operations in the inter-prediction image generating section 16 is as described above.
Generally, an optimum filter coefficient is different between the macroblocks to which the skip mode is applied and the macroblocks to which the skip mode is not applied.
As described above, the adaptive filter 100 divides the first prediction image #16' into the first region ER1 made up of the macroblocks to which the skip mode is applied and the second region ER2 made up of the macroblocks to which the skip mode is not applied, and the adaptive filter 100 can find, by use of the statistical method, optimum filter coefficients for respective regions of the reference image #14b which are referred to by the regions ER1 and ER2, respectively.
According to the configuration, it is possible to carry out appropriate filtering even in a case where the first prediction image #16' includes partitions to which the skip mode is applied and partitions to which the skip mode is not applied. This makes it possible to generate appropriate prediction image #16 and appropriate second motion vector #17.
Note that it is possible to employ a configuration in which the inter-prediction image generating section 16 repeats the processes in the step 104 to the step 107. Specifically, it is also possible that (i) the inter-prediction image #16 generated in the step 107 is divided into two regions depending on whether or not the skip mode is applied (ii) filter coefficients are determined for the respective regions by use of the statistical method, and (iii) further motion compensation is carried out based on output image data generated by use of the filter coefficients. It is possible to generate more appropriate prediction image and motion vector by carrying out the division into the regions, the motion compensation, and the calculation of the filter coefficients repeatedly (the same applies to the other operation examples).
It is also possible to employ a configuration in which not only the filter coefficient hk'(i, j)(k = 1, 2) but also the offset hoffset are optimized for each region (the same applies to the other operation examples).
In the present operation example, it is assumed that (i) the division into the regions and the motion compensation are not repeated and (ii) the first prediction image #16' and the inter-prediction image #16 are the same in prediction mode for each macroblock. This makes it possible to reduce a calculation cost.
As described above, an encoding device (the video encoding device 1) according to the present embodiment includes: a first filter (the adaptive filter 100) configured to act on a reference image (the reference image #14b) obtained by encoding and reconfiguring the input image #1; first predicting means (the prediction image generating section 16a) for generating a first prediction image (the first prediction image #16') by carrying out motion compensation with reference to an output image obtained through the first filter; a second filter configured to act on the reference image; second predicting means (the prediction image generating section 16a) for generating a second prediction image by carrying out motion compensation with reference to an output image obtained through the second filter; dividing means (the adaptive filter 100) for dividing each of the first prediction image (the first prediction image #16') and the input image #1 into a plurality of regions; and filter coefficient setting means (the adaptive filter 100) for setting a filter coefficient of the second filter so that a difference between the input image #1 and the first prediction image (the first prediction image #16') is minimized for each of the plurality of regions, the encoding device encoding residual data indicative of a difference between the input image and the second prediction image (the inter-prediction image #16).
To put it another way, an encoding device (the video encoding device 1) according to the present embodiment includes: a first filter (the adaptive filter 100) configured to act on a reference image (the reference image #14b) obtained by encoding and reconfiguring the input image #1; and first predicting means (the prediction image generating section 16a) for generating a first prediction image (the first prediction image #16') by carrying out motion compensation with reference to an output image obtained through the first filter, the first predicting means (the prediction image generating section 16a) generating a second filter configured to act on the reference image #14b and a second prediction image (the inter-prediction image #16) by carrying out motion compensation with reference to an output image obtained through the second filter, and the first filter (the adaptive filter 100) dividing the first prediction image (the first prediction image #16') and the input image # 1 into a plurality of regions and setting a filter coefficient of the second filter so that a difference between the input image #1 and the first prediction image (the first prediction image #16') is minimized for each of the plurality of regions.

The encoding device according to the present invention configured as described above includes: the dividing means for dividing each of the first prediction image and the input image into a plurality of regions; and the filter coefficient setting means for setting a filter coefficient of the second filter so that a difference between the input image and the first prediction image is minimized for each of the plurality of regions. With the configuration it is possible to adaptively seta filter coefficient of the second filter for each of the plurality of regions, even in a case where the reference image which is used to generate the first prediction image is not uniform in characteristics.

To put it another way, even in a case where the reference image which is used to generate the first prediction image is not uniform in characteristics, it is possible to carry out appropriate filtering by adaptively setting a filter coefficient of the second filter for each of the plurality of regions.

The above description has dealt with a configuration in which, in the step 104 and the step 105, the adaptive filter 100 (i) divides the first prediction image #16' into the first region ER1 made up of the macroblocks to which the skip mode is applied and the second region ER2 made up of the macroblocks to which the skip mode is not applied and (ii) calculates, by use of the statistical method, optimum filter coefficients for the first region ER1' and the second region ER2' of the input image #1 which correspond to the first region ER1 and the second region ER2, respectively. Note, however, that the present invention is not limited to this. It is possible to (A) divide the first prediction image #16' into a plurality of regions with the use of any of various conditions and (B) calculates, by use of the statistical method, optimum filter coefficients for respective regions of the input image #1 that correspond to the regions thus obtained.

The following description will discuss other operation examples of the inter-prediction image generating section 16.

(Operation example 2)

The following description will discuss, with reference to Fig. 5, a second example of an operation of the inter-prediction image generating section 16.

In the present operation example, the step 104 and the step 105 are replaced by a step 204 and a step 205 described below, respectively.

(Step 204)

The adaptive filter 100 divides the first prediction image #16' into a region ER21 made up of partitions each having a reference image index ref_idx of zero and the other region ER22.

The adaptive filter 100 (i) sets, as a region ER21', a region of the input image #1 which region corresponds to the region ER21 and (ii) sets, as a region ER22', a region of the input image #1 which region corresponds to the region ER22. Further, the adaptive filter 100 (i) sets, as a region ER~21', a region of the reference image #14b which region corresponds to the region ER21' and is referred to for prediction of the region ER21' and (ii) sets, as a region ER~22', a region of the reference image #14b which region corresponds to the region ER22' and is referred to for prediction of the region ER22'.

(Step 205)

The adaptive filter 100 (i) filters, on the basis of the filter coefficient h21'(i, j), the region ER~21' of the reference image #14b and (ii) filters, on the basis of the filter coefficient h22'(i, j), the region ER~22' of the reference image #14b.

Fig. 5 is a diagram illustrating a case where (i) a filter 1 using the filter coefficient h21' is applied to the region ER~21' of a reference picture A which is a reference picture constituting the reference image #14b and which has a reference image index ref_idx of zero and (ii) a filter 2 using the filter coefficient h22' is applied to the region ER~22' of a reference picture B which is a reference picture constituting the reference image #14b and which has a reference image index ref_idx of 1.

The filter coefficient h21'(i, j) is determined so that a difference between the region ER21 of the first prediction image #16' and the corresponding region ER21' of the input image #1 is minimized. The filter coefficient h22'(i, j) is determined so that a difference between the region ER22 of the first prediction image #16' and the corresponding region ER22' of the input image #1 is minimized. The statistical method can be used to determine a specific value of the filter coefficient hk'(i, j)(k=21,22).

By carrying out the filtering as described above, the adaptive filter 100 generates and outputs the second output image data #100'.

Generally, an optimum filter coefficient varies between (i) partitions having one reference image index and (ii) partitions having another reference image index since partitions having different reference image indices refer to different reference pictures.

According to the arrangement, the adaptive filter 100 can determine optimum filter coefficients for the respective regions ER21' and ER22' of the input image #1 which correspond to the region ER21, which is made up of partitions each having a reference image index ref_idx of zero, and the other region ER22, respectively. According to the arrangement, it is therefore possible to calculate optimum filter coefficients even if the first prediction image #16' is made up of (i) a region having a reference image index ref_idx of zero and (ii) a region having a reference image index ref_idx which is not zero. Further, even in such case, an appropriate prediction image #16 can be generated.

Note that, in a case where the first prediction image #16' includes partitions generated by bidirectional prediction, that is, in a case where the first prediction image #16' includes partitions to which two reference pictures are associated, a filter coefficient hk'(i, j) is, for example, determined so that a square error obtained from the following formula (3) is minimized.

$$E_k = \sum_{(x,y)\in ERk} \left( S(x,y) - \sum_{(i,j)\in R'} h_k{}'(i,j) \left( \frac{1}{2} S_{I1}(\widetilde{x}_1 + i, \widetilde{y}_1 + j) + \frac{1}{2} S_{I2}(\widetilde{x}_2 + i, \widetilde{y}_2 + j) \right) \right)^2 \qquad (3)$$

$S_{I1}(x{\sim}1{+}i, y{\sim}1{+}j)$ represents a pixel value at a coordinate (x~1+i, y~1+j) of image data obtained by carrying out motion compensation with respect to one of the two reference pictures with the use of a motion vector corresponding to the one, and $S_{I2}(x{\sim}2{+}i, y{\sim}2{+}j)$ represents a pixel value at a coordinate (x~2+i, y~2+j) of image data obtained by carrying out motion compensation with respect to the other of the two reference pictures with the use of a motion vector corresponding to the other. x~1 and y~1 are defined by x~1 = x + f(mvx1) - FOx and y~1 = y + f(mvy1)——FOy, respectively. Meanwhile, x~2 and y~2 are defined by x~2 = x + f(mvx2) - FOx and y~2 = y + f(mvy2) - FOy, respectively. (mvx1, mvy1) represents a component of the motion vector associated with the one of the two reference images, and (mvx2, mvy2) represents a component of the motion vector associated with the other of the two reference images.

In the present operation example, as is clear from Formula (3), two images obtained by carrying out the motion compensation with respect to the respective two reference pictures contribute by a 1/2 weight to calculation of filter coefficients.

Fig. 6 is a diagram illustrating, together with the inter-prediction image #16, reference pictures A to C constituting the reference image #14b. The reference picture A is a reference picture, in a reference image list L0, which is designated by a reference image index ref_idx of 0 and is also a reference picture, in a reference image list L1, which is designated by a reference image index ref_idx of 1. The reference picture B is a reference picture, in the reference image list L0, which is designated by the reference image index ref_idx of 1. The reference picture C is a reference picture, in the reference image list L1, which is designated by the reference image index ref_idx of 0. In Fig. 6, a maximum value of the reference image index ref_idx is 1. Note that the reference image list means a list including one or a plurality of candidate reference images. The reference images included in the list are given numbers (reference image indices) by which the reference images are distinguished from one another.

As illustrated in Fig. 6, the adaptive filter 100 (i) applies the filter 1 using the filter coefficient h21' to a region ER21'a of the reference picture A and a region ER21'b of the reference picture C, each of which regions is referred to by the region ER21" of the inter-prediction image #16, and (ii) applies the filter 2 using the filter coefficient h22' to a region ER22'a of the reference picture A and a region ER22'b of the reference picture B, each of which regions is referred to by the region ER22" of the inter-prediction image #16.

With the configuration, it is possible to calculate appropriate filter coefficients while taking into consideration the contribution of the two images obtained by carrying out the motion compensation with respect to the two reference pictures.

The above description has dealt with an example in which the two images obtained by carrying out the motion compensation with respect to the two reference pictures contribute by a 1/2 weight to the calculation of the filter coefficients. However, the present invention is not limited to this. It is also possible to employ a configuration in which one of the two reference pictures has a heavier weight of contribution than the other one. Further, a weight of contribution need not be uniform within an image, and may vary according to partition, macroblock, etc.

As described above, the adaptive filter 100 can carry out filtering, with the use of the filter coefficient hk'(i, j) thus calculated, with respect to the one reference picture which is referred to by the partitions which have been generated by the bidirectional prediction and the other reference picture.

Note that, in the present operation example, the adaptive filter 100 can be configured to divide the first prediction image #16' into three or more regions in accordance with the reference image index ref_idx, or can be configured to divide the first prediction image #16' into two regions depending on a mode of prediction, i.e., a forward prediction or a backward prediction. Alternatively, the adaptive filter 100 can be also configured to divide the first prediction image #16' into a plurality of regions depending on both of the type of prediction (the front-direction prediction/back-direction prediction) and the reference image index.

(Operation Example 3)

The following description will discuss a third example of an operation of the inter-prediction image generating section 16.

In the present operation example, the adaptive filter 100 carries out both the operation described in Operation Example 1 and the operation described in Operation Example 2, and outputs an inter-prediction image and a filter coefficient which have higher encoding efficiency.

Specifically, in the present operation example, the adaptive filter 100 generates an inter-prediction image #16a (which corresponds to the inter-prediction image #16 in Operation Example 1) by carrying out the operations in the step 101 to the step 107 described in Operation Example 1.

The adaptive filter 100 also generates an inter-prediction image #16b (which corresponds to the inter-prediction image #16 in Operation Example 2) by carrying out the operations in which the step 104 and the step 105 of Operation Example 1 are replaced by the step 204 and the step 205 described in Operation Example 2.

The adaptive filter 100 selects a prediction image having higher encoding efficiency from the inter-prediction images #16a and #16b and outputs the prediction image thus selected. Further, the adaptive filter 100 outputs the motion vector #17 and the filter coefficient #101 which have been used to generate the prediction image thus selected.

It is preferable that the adaptive filter 100 outputs a flag #102 indicative of which of the method in Operation Example 1 and the method in Operation Example 2 the prediction image has been generated by. It is preferable that the flag #102 is encoded by the variable-length encoding section 12 and the flag #102 thus encoded is transmitted, as a part of encoded data #2, to a video decoding device.

The video decoding device which has received the encoded data #2 generates a decoded image on the basis of the filter coefficient #101 and the method selected by the adaptive filter 100 out of the method in Operation Example 1 and the method in Operation Example 2.

The adaptive filter 100 can be configured to (i) compare a difference in area between the region ER1 and the region ER2 in Operation Example 1 and a difference in area between the region ER21 and the region ER22 in Operation Example 2 and (ii) output a prediction image and a filter coefficient which have been generated by one of Operation Examples 1 and 2 which one uses regions having a smaller difference in area.

The adaptive filter 100 can be configured to (i) compare a difference in area between the region ER1 and the region ER2 in Operation Example 1 and a difference in area between the region ER21 and the region ER22 in Operation Example 2 and (ii) output a prediction image and a filter coefficient which have been generated by one of Operation Examples 1 and 2 which one uses regions having a smaller difference in area. Instead of the difference in area, an area ratio can be used. In this case, it is preferable that a prediction image and a filter coefficient generated by one of Operation Examples 1 and 2 which one employs a region having an area ratio closer to 1.

In such case, the video decoding device can determine by which of Operation Examples 1 and 2 a prediction image has been generated, by comparing the difference in area. This makes it unnecessary for the adaptive filter 100 to output a flag indicative of which of Operation Examples 1 and 2 has been selected. This makes it possible to transmit image data by use of the encoded data #2 having a lower amount of encoding. Meanwhile, if the adaptive filter 100 outputs the flag indicating which of Operation Examples 1 and 2 has been selected, it is possible to reduce throughput of the video decoding device.

(Operation Example 4)

The following description will discuss a fourth example of an operation of the inter-prediction image generating section 16.

In the present operation example, the step 104 and the step 105 in Operation Example 1 are replaced by a step 404 and a step 405 described below, respectively.

(Step 404)

The adaptive filter 100 classifies the macroblocks included in the first prediction image #16' into two groups in accordance with a predetermined criterion. The predetermined criterion is a criterion which can be used also in a video decoding device corresponding to the present operation example in the same way as the video encoding device of the present operation example, without adding a flag etc. for determination to the encoded data. For example, the macroblocks are classified into the two groups depending on whether or not their macroblock numbers are not less than a predetermined value. Further, the adaptive filter 100 divides the first prediction image #16' into a region ER41 made up of macroblocks which belong to one of the two groups and a region ER42 made up of macroblocks which belong to the other group.

Further, the adaptive filter 100 divides the input image #1 into a region ER41' corresponding to the first region ER41 and a region ER42' corresponding to the second region ER42. Furthermore, the adaptive filter 100 (i) sets, as a region ER~41', a region of the reference image #14b which region corresponds to the first region ER41 and is referred to for prediction of the region ER41', and (ii) sets, as a region ER~42', a region of the reference image #14b which region corresponds to the second region ER42 and is referred to for prediction of the region ER42'.

Further, the adaptive filter 100 causes a flag #F1 to be stored in a memory. The flag #F1 is a flag indicative of which of the regions ER41' and ER42' a region included in the input image #1 belongs to. Alternatively, the adaptive filter 100 may derive the flag #F1 as required, instead of causing the flag #F1 to be stored in the memory.

(Step 405)

With reference to the flag #F1, the adaptive filter 100 (i) filters, on the basis of the filter coefficient h41'(i, j), the region ER~41' of the reference image #14b and (ii) filters, on the basis of the filter coefficient h42'(i, j), the region ER-42' of the reference image #14b.

The filter coefficient h41'(i, j) is determined so that a difference between the region ER41' of the input image #1 and the region ER41 of the first prediction image #16' is minimized. The filter coefficient h42'(i, j) is determined so that a difference between the region ER42' of the input image #1 and the region ER42 of the first prediction image #16' is minimized. The statistical method can be used to determine a specific value of the filter coefficient hk'(i, j)(k = 41, 42).

With reference to the flag #F1, the adaptive filter 100 (i) filters the region ER~41' of the reference image #14b with the use of the filter coefficient h41'(i, j) and (ii) filters the region ER~42' of the reference image #14b with the use of the filter coefficient h42'(i, j), thereby generating and outputting second output image data #100'.

In the case of employing the present operation example, the video decoding device for decoding the encoded data #2 is configured to divide a decoded image into the region ER41' and the region ER42' as described above on the basis of the predetermined criterion and filter the region ER41' and the region ER42' with the use of the filter coefficients h41'(i, j) and h42'(i, j), respectively.

The predetermined criterion is not limited to a specific one. For example, the adaptive filter 100 can allocate each of the macroblocks to a group to which a larger number of macroblocks out of a plurality of macroblocks adjacent to the macroblock belong. Note, however, that the present invention is not limited to this.

The above description has dealt with an example in which the macroblocks are divided into two groups. Note, however, that the present operation example is not limited to this. That is, it is possible to employ a configuration in which units larger than the macroblocks are divided into two groups or it is possible to employ a configuration in which units smaller than the macroblocks are divided into two groups. Further, the number of groups into which units such as macroblocks are divided is not limited to two groups, and can be three or more groups, in which case as many filter coefficients as the groups are found.

(Operation Example 5)

The following description will discuss a fifth example of an operation of the inter-prediction image generating section 16.

In the present operation example, the step 104 and the step 105 in Operation Example 1 are replaced by a step 504 and a step 505 described below, respectively.

(Step 504)

The adaptive filter 100 divides the macroblocks into two groups depending on whether or not an average pixel value in regions of the input image #1, which regions correspond to the macroblocks included in the first prediction image #16', is not less than a threshold value. Further, the adaptive filter 100 divides the first prediction image #16' into a region ER51 made up of macroblocks which belong to one of the two groups and a region ER52 made up of macroblocks which belong to the other group.

The adaptive filter 100 also divides the input image #1 into a region ER51' corresponding to the first region ER51 and a region ER52' corresponding to the second region ER52. Further, the adaptive filter 100 (i) sets, as a region ER~51', a region of the reference image #14b which region corresponds to the region ER51' and is referred to for prediction of the region ER51' and (ii) sets, as a region ER~52', a region of the reference image #14b which region corresponds to the region ER52' and is referred to for prediction of the region ER52'.

The adaptive filter 100 causes a flag #F2 to be stored in a memory. The flag #F2 is a flag indicative of which of the regions ER51' and ER52' a region included in the input image #1 belongs to. Alternatively, the adaptive filter 100 may be configured to derive the flag #F2 as required, instead of causing the flag #F2 to be stored in the memory.

The flag #F2 is sent to the variable-length encoding section 12 and is encoded as encoded data #2.

(Step 505)

The adaptive filter 100 (i) filters, on the basis of a filter coefficient h51'(i, j), the region ER~51' of the reference image #14b and (ii) filters on the basis of a filter coefficient h52'(i, j), the region ER~52' of reference image #14b.

The filter coefficient h51'(i, j) is determined so that a difference between the region ER51 of the first prediction image #16' and the corresponding region ER51' of the input image #1 is minimized. Further, the filter coefficient h52'(i, j) is determined so that a difference between the region ER52 of the first prediction image #16' and the corresponding region ER52' of the input image #1 is minimized. The statistical method can be used to determine a specific value of the filter coefficient hk'(i, j)(k = 51, 52).

With reference to flag #F2, the adaptive filter 100 filters the region ER~51' and the region ER~52' of the reference image #14b with the use of the filter coefficient h51'(i, j) and the filter coefficient h52'(i, j), respectively, thereby generating and outputting second output image data #100'.

Generally, an optimum filter coefficient varies depending on an average luminance in a region to be filtered with the use of the filter coefficient. Accordingly, even if the regions of the input image #1 have different luminance, it is possible to carry out appropriate filtering by determining both of (i) a filter coefficient for a region having a higher average luminance and (ii) a filter coefficient for a region having a lower average luminance.

In the case of employing the present operation example, the video decoding device for decoding encoded data #2 divides a decoded image into the region ER51' and the region ER52' with reference to the flag #F2 included in the encoded data #2, and filters regions respectively referred to by the regions ER51' and ER52', with the use of the filter coefficients h51'(i, j) and h52'(i, j), respectively.

The step 504 may be replaced by a step 504' described below.

(Step 504')

The adaptive filter 100 allocates a target macroblock to a first group in a case where a difference between a region corresponding to the target macroblock included in the first prediction image #16' and a corresponding region of the input image #1 is equal to or larger than a predetermined threshold value. Otherwise, the adaptive filter 100 allocates the target macroblock to a second group.

Specifically, for example, the difference may be obtained from a formula which is obtained by replacing the region ERk in Formula 2 with a region MB included in the target macroblock.

The adaptive filter 100 divides the first prediction image #16' into the region ER51 made up of macroblocks which belong to the first group and the region ER52 made up of macroblocks which belong to the second group.

Further, the adaptive filter 100 divides the input image #1 into the region ER51' corresponding to the first region ER51 and the region ER52' corresponding to the second region ER52. Furthermore, the adaptive filter 100 (i) sets, as a region ER~51', a region of the reference image #14b which region corresponds to the region ER51' and is referred to for prediction of the region ER51' and (ii) sets, as a region ER~52', a region of the reference image #14b which region corresponds to the region ER52' and is referred to for prediction of the region ER52'.

Furthermore, the adaptive filter 100 causes a flag #F2 to be stored in a memory. The flag #F2 is a flag indicative of which of the regions ER51' and ER52' a region included in the input image #14b belongs to.

The flag #F2 is transmitted to the variable-length encoding section 12, and is encoded as the encoded data #2.

Generally, the optimum filter coefficient varies depending on a magnitude of a difference (prediction difference) between a prediction image (first prediction image #16') and an input image (input image #1).

According to the arrangement, it is possible to carry out appropriate filtering even in a case where a difference between a target macroblock in the input image #1 and a region of the reference image #14b which region is referred to by the target macroblock largely varies from one target macroblock to another.

The above description has dealt with an example in which the macroblocks are divided into two groups. Note, however, that the present operation example is not limited to this. That is, it is possible to employ a configuration in which units larger than the macroblocks are divided into two groups or it is possible to employ a configuration in which units smaller than the macroblocks are divided into two groups. Further, it is possible to employ a configuration in which units such as the macroblocks are divided into three or more groups depending on a difference in pixel value or a magnitude of a difference.

[Operation example 6]

The following description will discuss, with reference to Fig. 7, a sixth example of an operation of the inter-prediction image generating section 16.

In a case where the first prediction image #16' is divided into two regions in the foregoing operation examples 1 through 5 and operation examples described later so that one of the two regions has an area ratio, with respect to the first prediction image # 16', equal to or smaller than a predetermined area ratio, the adaptive filter 100 carries out the following filtering in the present operation example. That is, the adaptive filter 100 (i) filters, with the use of the standard filter coefficient described above, a region of the reference image #14b which region is referred to by the one of the two regions of the first prediction image #16' and (ii) filters, with the use of an optimum filter coefficient calculated by the statistical method described above, a region of the reference image #14b which region is referred to by the other of the two regions of the first prediction image #16'.

Specifically, for example, in a case where the first region ER1 described in Operation Example 1 has an area ratio, with respect to the first prediction image #16', equal to or smaller than a predetermined area ratio, the adaptive filter 100 (i) filters the region ER1' with the use of the standard filter coefficient and (ii) filters the region ER2' with the use of the filter coefficient h2'(i, j).

The filter coefficient h2' (i,j) is determined so that a difference between (i) the region ER2 of the first prediction image #16' and (ii) a corresponding region of the input image #1 is minimized. The statistical method can be used to determine a specific value of the filter coefficient h2'(i, j).

Fig. 7 is a diagram illustrating an example of the first region ER1 and the second region ER2 in the first prediction image #16'.

As described above, in the present operation example, a step of determining a filter coefficient by the statistical method is not carried out for the region having the area ratio equal to or lower than the predetermined area ratio, and the region is filtered with the use of the standard filter coefficient. The same applies to Operation Examples 2 through 4.

In general, the smaller the region, the smaller the number of samples of prediction residual which are used for determination of the filter coefficient with the use of the statistical method. That is, the number of pixels contained in the corresponding region Erk in the formula (2) becomes smaller. As such, for such a small region, it is difficult to achieve an improvement in prediction accuracy of the prediction image by use of the statistical method. Even if use of the statistical method does provide an improvement in the prediction accuracy, there is a possibility that the encoding efficiency is lowered because, in such a small region, an amount of encoding required for the filter coefficient exceeds a reduction in encoding which is brought about by the improvement in the prediction accuracy. Further, there is another problem that the use of the statistical method causes an increase in calculation cost.

According to the configuration as described above, the region having the area ratio equal to or smaller than the predetermined area ratio can be filtered with the use of the standard filter coefficient. This allows prevention of the problems of the decline in the encoding efficiency and the increase in calculation cost.

It is also possible to employ a configuration in which (i) the adaptive filter 100 outputs, in the step as described above, a flag #F3 indicative of the region for which the standard filter coefficient is used and (ii) the variable-length encoding section 12 encodes the flag #F3 as a part of the encoded data #2. According to the configuration, the video decoding device that decodes the encoded data #2 can distinguish, by referring to the flag #F3, between (i) a region to which the standard filter coefficient should be applied and (ii) a region to which the filter coefficient having been determined by the adaptive filter 100 with the use of the statistical method should be applied.

In a case of employing a configuration in which the value of the predetermined area ratio is recorded in a memory included in the video decoding device, the video decoding device can distinguish, without referring to the flag #F3, between (i) the region to which the standard filter coefficient should be applied and (ii) the region to which the filter coefficient having been determined by the adaptive filter 100 with the use of the statistical method should be applied. In this case, therefore, the adaptive filter 100 need not output the flag #F3.

In the present operation example, it is also possible to employ a configuration in which, in a case where one of the two regions into which the first prediction image #16' is divided has an area ratio, with respect to the first prediction image #16', equal to or smaller than the predetermined area ratio, a filter coefficient is adaptively calculated for the entire first prediction image #16' which has not been divided yet. In this case, it is preferable that the adaptive filter 100 output a flag that indicates that a plurality of adaptive filters are not used.

(Operation Example 7)

The following description will discuss, with reference to Figs. 8 and 9, a seventh example of an operation of the inter-prediction image generating section 16.
In the present operation example, the step 104 and the step 105 are replaced respectively by a step 704 and a step 705 to be described below. In the present operation example, a value of the reference image index ref_idx is 0 or 1.

(Step 704)

The adaptive filter 100 divides the first prediction image #16' into (i) a region ER71 made up of partitions referring to a reference picture having a reference image index ref_idx of 0 and (ii) a region ER72 made up of partitions referring to a reference picture having a reference image index ref_idx of 1.
The adaptive filter 100 also divides the input image #1 into (i) a region ER71' corresponding to the first region ER71 and (ii) a region ER72' corresponding to the second region ER72. The adaptive filter 100 (i) sets, as a region ER~71', a region of a reference picture RP (ref_idx = 0) of the reference image #14b, which region is referred to for prediction of the region ER71' and (ii) sets, as a region ER~72', a region of a reference picture RP (ref_idx = 1) of the reference image #14b, which region is referred to for prediction of the region ER72'. The reference picture RP (ref_idx = 0) of the reference image #14b has a reference image index ref_idx of 0, and the reference picture RP (ref_idx = 1) of the reference image #14b has a reference image index ref_idx of 1.

(Step 705)

In a case where (i) the region ER71 has an area ratio, with respect to the first prediction image #16', equal to or higher than a predetermined area ratio and (ii) the region ER72 has an area ratio, with respect to the first prediction image #16', equal to or higher than the predetermined area ratio, the adaptive filter 100 operates in the same manner as described in Operation Example 2.
In a case where the region ER72 has an area ratio, with respect to the first prediction image #16', smaller than the predetermined area ratio, the adaptive filter 100 finds and sets a filter coefficient h71'(i, j) for the reference picture RP having the reference image index ref_idx of 0 in the reference image #14b.
Note that the filter coefficient h71'(i, j) is determined so that a difference between the region ER71 of the first prediction image #16' and the region ER71' of the input image #1 is minimized. The statistical method can be used to determine a specific value of the filter coefficient h71'(i, j).
In a case where the region ER72 has an area ratio, with respect to the first prediction image #16', smaller than the predetermined area ratio, the adaptive filter 100 sets a filter coefficient h72'(i, j) and carries out a process in a step 705.1 below. The filter coefficient h72'(i, j) is not limited to a specific one, provided that it is different from the filter coefficient h71'(i, j). For example, the filter coefficient h72'(i, j) can be of a filter having an edge-emphasizing effect.

(Step 705.1)

In the step 705.1, the adaptive filter 100 generates a second output image data #100' for a frame to be processed, with the use of the filter coefficients h71'(i, j) and h72'(i, j). Note that, in the step 705.1, the adaptive filter 100 changes interpretation of the reference image index ref_idx. That is, in a case where the reference image #14b is referred to with a reference image index ref_idx of 0, the adaptive filter 100 refers to the reference picture RP (ref_idx = 0) in the reference image #14b and carries out filtering using the filter coefficient h71'(i, j). In a case where the reference image #14b is referred to with a reference image index ref_idx of 1, the adaptive filter 100 refers to, unlike a usual operation flow, the reference picture RP (ref_idx = 0) in the reference image #14b and carries out filtering using the filter coefficient h72'(i, j)'.
In the usual operation flow, the inter-prediction image generating section 16 selects (i) a reference picture, out of the plurality of reference pictures in the reference image #14b, which has a smallest difference from the input image #1 and (ii) a motion vector so as to generate a prediction image. At this time, the adaptive filter 100 uses, as the reference picture, a reference picture designated by the reference image index ref_idx. In the step 705.1, however, (i) only the reference picture RP (ref_idx = 0) having the reference image index ref_idx of 0 is used as the reference picture in the reference image # 14b, irrespective of a designated value of the reference image index ref_idx, and (ii) (a) one of two types of filters which has a smaller difference from the input image and (b) a motion vector are selected with the use of the ref_idx so as to generate the second output image data #100'.
In other words, in a case where the region ER72 has an area ratio, with respect to the first prediction image #16', equal to or smaller than the predetermined area ratio at the time of regenerating the prediction image, the adaptive filter 100 (i) refers to, with the use of the reference image index ref_idx = 1, a same reference picture as that designated by the reference image index ref_idx = 0 and (ii) filters the region ER722' of the reference picture with the use of, for example, a filter coefficient having an edge-emphasizing effect.

Fig. 8 is a diagram showing a case in which, in a case where a maximum value of the reference image index ref_idx is 1, (i) a filter 1, in which the filter coefficient h71' is used, is applied to a region ER712' of a reference picture A of the reference image #14b, which reference picture A is designated by the reference image index ref_idx = 0 and (ii) a filter 1', in which the filter coefficient h72' having an edge-emphasizing effect is used, is applied to the region ER722' of the reference picture A designated also by the reference image index ref_idx = 1.

Note that the filter coefficient having the edge-emphasizing effect can be a predetermined coefficient. It is also possible to use a standard filter coefficient in place of the filter coefficient having the edge-emphasizing effect.

The adaptive filter 100 generates and outputs the second output image data #100' by carrying out the filtering as described above.

As described above, in the present operation example, the reference image index ref_idx functions as an index that indicates whether to (i) carry out adaptive filtering or (ii) carry out non-adaptive filtering with the use of the filter coefficient having the edge-emphasizing effect.

In the present operation example, in a case where the reference image index ref_idx = 1 is hardly used, the reference image index ref_idx can be used as an index that indicates that the non-adaptive filtering is carried out. This allows switching between the adaptive filtering and the non-adaptive filtering to be carried out without causing an increase in the code amount caused by additional side information.

In a case where, as in the present operation example, interpretation of a parameter is changed during the operation, it is preferable that the prediction image is generated with the use of the first motion vector #17' and the prediction mode which have been found again with the use of a parameter based on an interpretation thus changed, instead of the first motion vector #17' and the prediction mode which have been found with the use of a parameter based on an original interpretation.

The description above has dealt with as an example, a case in which the inter-prediction image #16 is a P-slice generated by unidirectional prediction, i.e., a case in which the partitions of the inter-prediction image #16 are generated with reference to a single reference picture. Note, however, that the present invention is not limited to this.

For example, the invention can be similarly applied to a case in which the inter-prediction image #16 is a B-slice generated by bidirectional prediction, i.e., a case in which the partitions of the inter-prediction image #16 are generated with reference to two reference pictures.

In this case, the step 704 and the step 705 are respectively replaced by a step 704' and a step 705' to be described below.

(Step 704')

The adaptive filter 100 divides the first prediction image #16' into (i) a region ER81 made up of partitions referring to (a) a reference picture having a reference image index ref_idx of 0 in the reference image list L0 and (b) a reference picture having a reference image index ref_idx of 0 in the reference image list L1 and (ii) a region ER82 made up of partitions referring to (a) a reference picture having a reference image index ref_idx of 1 in the reference image list L0 and (b) a reference picture having a reference image index ref_idx of 1 in the reference image list L1.

The adaptive filter 100 also divides the input image #1 into (i) a region ER81' corresponding to the first region ER81 and (ii) a region ER82' corresponding to the second region ER82. In accordance with this, the adaptive filter 100 (i) sets, as a region ER~81'a, a region of a reference picture RP (L0, ref_idx = 0) of the reference image #14b, which region is referred to for prediction of the region ER81' and (ii) sets, as a region ER~81'b, a region of a reference picture RP (L1, ref_idx = 0) of the reference image #14b, which region is referred to for prediction of the region ER81'. The reference picture RP (L0, ref_idx = 0) of the reference image #14b has a reference image index ref_idx of 0 in the reference image list L0, and the reference picture RP (L1, ref_idx = 0) of the reference image #14b has a reference image index ref_idx of 0 in the reference image list L1.

The adaptive filter 100 (i) sets, as a region ER~82'a, a region of a reference picture RP (L0, ref_idx = 1) of the reference image #14b, which region is referred to for prediction of the region ER82' and (ii) sets, as a region ER~82'b, a region of a reference picture RP (L1, ref_idx = 1) of the reference image #14b, which region is referred to for prediction of the region ER82'. The reference picture RP (L0, ref_idx = 1) of the reference image #14b has a reference image index ref_idx of 1 in the reference image list L0, and the reference picture RP (L1, ref_idx = 1) of the reference image #14b has a reference image index ref_idx of 1 in the reference image list L1.

(Step 705')

In a case where (i) the region ER81 has an area ratio, with respect to the first prediction image #16', equal to or higher than a predetermined area ratio and (ii) the region ER82 has an area ratio, with respect to the first prediction image #16', equal to or higher than the predetermined area ratio, the adaptive filter 100 operates in a similar manner as described in Operation Example 2 so as to (i) carry out adaptive filtering with respect to each of the region ER~81'a and the region ER~81'b with the use of a filter coefficient h81'(i, j) and (ii) carry out adaptive filtering with respect to each of the region ER~82'a and the region ER~82'b with the use of a filter coefficient h82'(i, j). For determination of the filter coefficient h81'(i, j) and the filter coefficient h82'(i, j), the statistical method as described above can be used.

On the other hand, in a case where the region ER82 has an area ratio, with respect to the first prediction image #16', smaller than the predetermined area ratio, the adaptive filter 100 finds and sets a filter coefficient h81"(i, j) so that a difference between the region ER81 of the first prediction image #16' and the region ER81' of the input image #1 is minimized. In addition, the adaptive filter 100 sets a filter h82"(i,j) which is different from the filter coefficient h81"(i, j) and, for example, has an edge-emphasizing effect. In a case where the region ER82 has an area ratio, with respect to the first prediction image #16', smaller than the predetermined area ratio, the adaptive filter 100 carries out a process in a step 705'.1 below.

(Step 705'.1)

In the step 705.1, a second output image data #100' is generated for the target frame with the use of the filter coefficients h81"(i, j) and h82"(i, j). Note that, in the step 705'.1, the adaptive filter 100 carries out filtering in the following manner irrespective of the reference image list. In a case where the reference image #14b is referred to with a reference image index ref_idx of 0, the adaptive filter 100 carries out filtering with the use of the filter coefficient h81"(i, j) with reference to the reference picture RP (ref_idx = 0) of the reference image #14b. In a case where the reference image #14b is referred to with a reference image index ref_idx of a value that is not 0, the adaptive filter 100 carries out filtering, not in a usual manner but with the use of the filter coefficient h82"(i, j)' with reference to the reference picture RP (ref_idx = 0) of the reference image #14b.

In other words, in a case where the region ER82 has an area ratio, with respect to the first prediction image #16', equal to or smaller than the predetermined area ratio, the adaptive filter 100 carries out the following filtering at the time of regenerating the prediction image. That is, the adaptive filter 100 (i) refers to, with the use of the reference image index ref_idx = 1 in the reference image list L0, a same reference picture as that designated by the reference image index ref_idx = 0 in the reference image list L0, and (ii) filters a region ER~822'a of the reference picture with the use of, for example, a filter coefficient having an edge-emphasizing effect. The adaptive filter 100 also (i) refers to, with the use of the reference image index ref_idx = 1 in the reference image list L1, a same reference picture as that designated by the reference image index ref_idx = 0 in the reference image list L1, and (ii) filters a region ER~822'b of the reference picture with the use of, for example, a filter coefficient having an edge-emphasizing effect.

Fig. 9 is a diagram showing a case in which, in the reference image #14b, (i) a filter 1 in which the filter coefficient h81" is used is applied to (a) a region ER~812'a of a reference picture A designated by the reference image list L0 and by the reference image index ref_idx = 0 and (b) a region ER~812'b of a reference picture B designated by the reference image list L1 and by the reference image index ref_idx = 0 and (ii) a filter 1' in which the filter coefficient h82" having the edge-emphasizing effect is used is applied to (a) a region ER~822'a in the reference picture A designated also by the reference image list L0 and by the reference image index ref_idx = 1 and (b) a region ER~822'b in a reference picture B designated also by the reference image list L1 and the reference image index ref_idx = 1.

Note that the filter coefficient having the edge-emphasizing effect can be a predetermined coefficient. In place of the filter coefficient having the edge-emphasizing effect, (i) a filter coefficient having other effect such as a blurring effect or (ii) a standard filter coefficient can be used.

The adaptive filter 100 generates and outputs the second output image data #100' by carrying out the filtering as described above.

As described above, also in a case where the inter-prediction image #16 is a B-slice, the reference image index ref_idx functions as an index that indicates whether to (i) carry out adaptive filtering or (ii) carry out non-adaptive filtering with the use of the filter coefficient having the edge-emphasizing effect.

As described above, also in the case where the inter-prediction image #16 is a B-slice, the reference image index ref_idx can be used, in a case where the reference image index ref_idx = 1 is hardly used, as an index that indicates that the non-adaptive filtering is carried out. This allows switching between the adaptive filtering and the non-adaptive filtering to be carried out for each partition without causing an increase in the code amount due to additional side information.

Note that the encoded data #2 preferably includes a flag for selecting whether a value stored as the reference image index ref_idx (i) represents an identification number of the reference image, which is the original meaning or (ii) represents that the value is used for selection of a filter.

(Operation example 8)

The following description will discuss, with reference to Figs. 10 and 11, an eighth example of an operation of the inter-prediction image generating section 16.

In the present operation example, the step 104 and the step 105 are replaced respectively by a step 804 and a step 805 described below.

(Step 804)

The adaptive filter 100 divides the first prediction image #16' into (i) a region ER91 made up of partitions referring to a reference picture in the reference image list L0 and (ii) a region ER92 made up of partitions referring to a reference picture in the reference image list L1. The adaptive filter 100 also divides an input image into (i) a region ER91' corresponding to the first region ER91 and (ii) a region ER92' corresponding to the second region ER92.

The adaptive filter 100 (i) sets, as a region ER~91'a, a region of the reference picture RP (L0, ref_idx = 0) of the reference image #14b, which region is referred to for prediction of the region ER91' and (ii) sets, as a region ER~91'b, a region of the reference picture RP (L0, ref_idx = 1) of the reference image #14b, which region is referred to for prediction of the region ER91'. The reference picture RP (L0, ref_idx = 0) of the reference image #14b has a reference image index ref_idx of 0 in the reference image list L0, and the reference picture RP (L0, ref_idx = 1) of the reference image #14b has a reference image index ref_idx that is not 0 in the reference image list L0.

The adaptive filter 100 (i) sets, as a region ER~92'a, a region of the reference picture RP (L1, ref_idx = 0) of the reference image #14b, which region is referred to for prediction of the region ER92' and (ii) sets, as a region ER~92'b, a region of the reference picture RP (ref_idx = 1) of the reference image #14b, which region is referred to for prediction of the region ER92'. The reference picture RP (L1, ref_idx = 0) of the reference image #14b has a reference image index ref_idx of 0 in the reference image list L1, and the reference picture RP (L1, ref_idx = 1) of the reference image #14b has a reference image index ref_idx of 1 in the reference list L1. The region ER~91'a and region ER~91'b are collectively referred to as a region ER~91', and the region ER~92'a and region ER~92'b are collectively referred to as a region ER~92'.

(Step 805)

In a case where each of the region ER~91' and the region ER-92' has a weight of contribution to the first prediction image #16' which weight is heavier than a predetermined weight, the adaptive filter 100 (i) carries out adaptive filtering with respect to each of the region ER91'a and the region ER91'b with the use of a filter coefficient h91'(i, j) and (ii) carries out adaptive filtering with respect to the region ER92'a and the region ER92'b with the use of a filter coefficient h92'(i, j). For determination of the filter coefficient h91'(i, j) and the filter coefficient h92'(i, j), the statistical method as described above can be used.

Note that the weight of contribution corresponds to, for example, in the H.264/AVC standard, a ratio of (i) a product of (a) a weight of luminance for a region of each of two reference pictures referred to at the time of generating each region of a B picture and (b) an area of the region of the each of the two reference pictures to (ii) an area of the each of the two reference pictures. A total weight of contribution equals the number of pixels. In a case where a region is referred to multiple times, a weight of contribution for the region is counted in multiple times as well.

Fig. 10 is a view showing a reference picture A, a reference picture B, and a reference picture C of the reference image #14b, and the inter-prediction image #16. The reference picture A is designated by the reference image index ref_idx = 0 in the reference image list L0 and also by the reference image index ref_idx = 1 in the reference image list L1. The reference picture B is designated by the reference image index ref_idx = 1 in the reference image list L0. The reference picture C is designated by the reference image index ref_idx = 0 in the reference image list L1. In Fig. 10 a maximum value of the ref_idx is 1.

As shown in Fig. 10, the adaptive filter 100 applies (i) a filter 1, in which the filter coefficient h91'(i, j) is used, to each of the region ER~91'a of the reference picture A and the region ER~91'b of the reference picture B and (ii) a filter 2, in which the filter coefficient h92'(i, j) is used, to each of the region ER~92'b of the reference picture A and the region ER~92'a of the reference picture C.

Meanwhile, in a case where the region ER~91' has a weight of contribution to the entire first prediction image #16 which weight is lighter than a predetermined weight, the adaptive filter 100 (i) changes interpretation of information that designates the reference image lists L0 and L1 and (ii) generates a prediction image again by carrying out a process in a step 805.1 below.

(Step 805.1)

The following description will discuss how the adaptive filter 100 operates, for example, in a case where the region ER92' has a weight of contribution to the entire first prediction image #16 which weight is lighter than the predetermined weight.

In a case where the region ER92' has a weight of contribution to the entire first prediction image #16 which weight is lighter than the predetermined weight, (i) the interpretation of the information that designates the reference image lists L0 and L1 is changed and (ii) the second output image data #100' is generated on the basis of a new interpretation.

Procedures in the step 805.1 are the same as those normally carried out, except for a procedure of the adaptive filter. In a case where the region ER92' has a weight of contribution to the entire first prediction image #16 which weight is lighter than the predetermined weight, the adaptive filter 100 carries out an usual operation of (i) obtaining, for a reference picture referred to by designating the reference image list L0, a reference picture of a designated ref_idx from the reference image list L0 and (ii) carrying out the adaptive filtering with the use of the filter coefficient h91"(i, j). The filter coefficient h91"(i, j) is of such a filter that minimizes a difference between the region ER91 of the first prediction image #16' and the region ER91' of the input image.

In a case where the reference image list L1 is designated when a reference picture is designated, the adaptive filter 100 (i) uses the reference image list L0 in place of the reference image list L1 and (ii) applies a filter with a coefficient different from the filter coefficient h91"(i, j). For example, the adaptive filter 100 carries out filtering with the use of a filter coefficient having an edge-emphasizing effect. The filter coefficient having the edge-emphasizing effect can be a predetermined coefficient. It is also possible to use, in place of the filter coefficient having the edge-emphasizing effect, (i) a filter coefficient having other effect such as a blurring effect or (ii) a standard filter coefficient.

In other words, in a case where the region ER92' has a weight to the first prediction image #16' lighter than the predetermined weight, the adaptive filter 100 carries out the following filtering at the time of regenerating a prediction image. That is, the adaptive filter 100 (i) refers to, with the use of a reference image list number L1 and the reference image index ref_idx = n (n = 0,1), a same reference picture as that designated by a reference image list number L0 and the reference image index ref_idx = n and (ii) filters a region that is being referred to in the reference picture, with the use of, for example, a filter coefficient having an edge-emphasizing effect.

Fig. 11 is a diagram showing a case in which, in the reference image #14b, (i) an adaptive filter 1, in which the filter coefficient h91" is used, is applied to (a) a region ER~912'a of a reference picture A designated by the reference image list L0 and the reference image index ref_idx = 0 and (b) a region ER~922'b of a reference picture B designated by the reference image list L0 and the reference image index ref_idx = 1 and (ii) a filter 1' having an edge-emphasizing effect is applied to (a) a region ER~912"b of the reference picture A designated also by the reference image list L1 and the reference image index ref_idx = 1 and (b) a region ER~922"a of the reference picture B designated also by the reference image list L1 and the reference image index ref_idx = 1.

Note that the filter coefficient having the edge-emphasizing effect can be a predetermined coefficient. In place of the filter coefficient having the edge-emphasizing effect, a standard filter coefficient can be used.

The adaptive filter 100 generates and outputs the second output image data #100' by carrying out the filtering as described above.

As described above, in the present operation example, the reference image list number functions as an index that indicates whether to (i) carry out adaptive filtering or (ii) carry out non-adaptive filtering with the use of the filter coefficient having the edge-emphasizing effect.

In the present operation example, in a case where the reference image list number L1 is not used, the reference image list number can be used as an index that indicates that the non-adaptive filtering is carried out. This allows switching between the adaptive filtering and the non-adaptive filtering to be carried out without causing an increase in the code amount due to additional side information.

In a case where, as in the present operation example, interpretation of a parameter is changed during the operation, it is preferable that the prediction image is generated with the use of the first motion vector #17' and the prediction mode which have been found again with the use of a parameter that is based on an interpretation thus changed, instead of the first motion vector #17' and the prediction mode which have been found with the use of a parameter that is based on the original interpretation.

The description above has dealt with an example in which the region ER92' has a weight of contribution to the entire first prediction image #16' which weight is lighter than the predetermined weight. Note that the description similarly applies to a case in which the region ER91' has a weight of contribution to the entire first prediction image #16' which weight is lighter than the predetermined weight.

(Operation Example 9)

The following description will discuss a ninth example of an operation of the inter-prediction image generating section 16.

In the present operation example, the step 104 and the step 105 are respectively replaced by a step 904 and a step 905 as described below.

(Step 904)

The adaptive filter 100 divides the first prediction image #16' into (i) a region ER101, which is an upper half of the first prediction image #16' and (ii) a region ER102, which is a lower half of the first prediction image #16'.

The adaptive filter 100 divides the input image #1 into (i) a region ER101' corresponding to the first region ER101 and (ii) a region ER102' corresponding to the second region ER102. The adaptive filter 100 (i) sets, as a region ER~101', a region of the reference image #14b, which region corresponds to the region ER101' and is referred to for prediction of the region ER101' and (ii) sets, as a region ER~102', a region of the reference image #14b, which region corresponds to the region ER102' and is referred to for prediction of the region ER102'.

(Step 905)

The adaptive filter 100 (i) carries out adaptive filtering with respect to the region ER~101' of the reference image #14b, on the basis of a filter coefficient h101'(i, j) and (ii) carries out adaptive filtering with respect to the region ER~102' of the reference image #14b, on the basis of a filter coefficient h102'(i, j).

The filter coefficient h101'(i, j) is determined so that a difference between the region ER101 of the first prediction image #16' and the region ER101', corresponding to the region ER101, of the input image #1 is minimized. The filter coefficient h102'(i, j) is determined so that a difference between the region ER102 of the first prediction image #16' and the corresponding region ER102' of the input image #1 is minimized. For determination of a specific value of the filter coefficient hk'(i, j) (k = 101, 102), the statistical method as described above can be used.

The adaptive filter 100 generates and outputs the second output image data #100' by carrying out the filtering as described above.

The inter-prediction image generating section 16 operates as described above, so that adaptive filtering can be carried out separately to with respect to (i) a region of a reference image which region is referred to by an upper half of an image and (ii) a region of the reference image which region is referred to by a lower half of the image.

It is possible to employ a configuration in which one of the upper region and the lower region is subjected to a filtering in which a predetermined filter coefficient is used, in place of the adaptive filtering.

It is also possible to employ a configuration in which (i) adaptive filtering is carried out only with respect to a region of a reference image which region is referred to by a center part of an image and (ii) filtering using a predetermined filter coefficient is carried out with respect to the other region of the reference image.

In general, a viewer tends to focus on a center part of a screen. The configuration above allows an adaptive filtering to be carried out selectively with respect to a region on which the user tends to focus. This enables more efficient filtering while reducing a processing cost.

(Operation Example 10)

The following description will discuss a tenth example of an operation of the inter-prediction image generating section 16.

In the present operation example, the step 104 and the step 105 are respectively replaced by a step 1004 and a step 1005 as described below.

(Step 1004)

The adaptive filter 100 divides the first prediction image #16' into (i) a region ER111 made up of blocks having a size equal to or larger than a predetermined size and (ii) a ER112 made up of blocks having a size smaller than the predetermined size.

The blocks can be (i) macroblocks or (ii) units smaller than the macroblocks.

The adaptive filter 100 divides the input image #1 into (i) a region ER111' corresponding to the first region ER111 and (ii) a region ER112' corresponding to the second region ER112. The adaptive filter 100 (i) sets, as a region ER~111', a region of the reference image #14b, which region corresponds to the region ER111' and is referred to for prediction of the region ER111' and (ii) sets, as a region ER~112', a region of the reference image #14b, which region corresponds to the region ER 112' and is referred to for prediction of the region ER112'.

(Step 1005)

The adaptive filter 100 (i) carries out adaptive filtering with respect to the region ER~111' of the reference image #14b, on the basis of a filter coefficient h111'(i, j) and (ii) carries out adaptive filtering with respect to the region ER~112' of the reference image #14b, on the basis of a filter coefficient h112'(i, j).

The filter coefficient h11'(i, j) is determined so that a difference between the region ER111 of the first prediction image #16' and the corresponding region ER111' of the input image #1 is minimized. The filter coefficient h112'(i, j) is determined so that a difference between the region ER112 of the first prediction image #16' and the corresponding region ER112' of the input image #1 is minimized. For determination of the filter coefficient hk'(i, j) (k=111,112), the statistical method as described above can be used.

The adaptive filter 100 generates and outputs the second output image data #100' by carrying out the filtering as described above.

In general, an optimum filter coefficient varies depending on a size of a block.

The inter-prediction image generating section 16 operates as described above, so that an adaptive filtering can be carried out separately with respect to (i) a region of a reference image which region is referred to by a region made up of blocks each having a size equal to or larger than a predetermined size and (ii) a region of a reference image which region is referred to by a region made up of blocks each having a size smaller than the predetermined size.

The first prediction image #16' can be divided into two or more regions in accordance with a size of each partition.

It is also possible to employ a configuration in which a region of the reference image referred to by a region made up of (i) the blocks each having a size equal to or larger than the predetermined size or (ii) the partitions each having a size equal to or larger than the predetermined size is filtered with the use of a predetermined filter coefficient.

In general, an image made up of blocks or partitions having a larger size tends to be flatter.

According to the configuration, it is possible to (i) carry out a fixed (non-adaptive) filtering with respect to a region of a reference image which region is referred to by blocks (or partitions) each having a size equal to or larger than a predetermined size and (ii) carry out an adaptive filtering with respect to a region of the reference image which region is referred to by blocks (or partitions) each having a size smaller than the predetermined size.

The configuration enables more effective filtering while reducing the processing cost.

(Operation Example 11)

The following description will discuss an eleventh example of an operation of the inter-prediction image generating section 16.

In the present operation example, the step 104 and the step 105 are respectively replaced by a step 1104 and a step 1105 described below.

(Step 1104)

The adaptive filter 100 divides the first prediction image #16' into (i) a region ER121 made up of partitions to each of which a motion vector having a value equal to or greater than a predetermined value is assigned and (ii) a region ER122 made up of partitions to each of which a motion vector having a value smaller than the predetermined value is assigned.

The adaptive filter 100 divides the input image #1 into (i) a region ER 121' corresponding to the first region ER121 and (ii) a region ER122' corresponding to the second region ER122. The adaptive filter 100 (i) sets, as a region ER~121', a region of the reference image #14b, which region corresponds to the region ER121' and is referred to for prediction of the region ER121' and (ii) sets, as a region ER~122', a region of the reference image #14b, which region corresponds to the region ER122' and is referred to for prediction of the region ER122'.

(Step 1105)

The adaptive filter 100 (i) carries out adaptive filtering with respect to the region ER121' of the reference image #14b, on the basis of the filter coefficient h121'(i, j) and (ii) carries out adaptive filtering with respect to the region ER122' of the reference image #14b, on the basis of the filter coefficient h122'(i, j).

The filter coefficient h121'(i, j) is determined so that a difference between the region ER121 of the first prediction image #16' and the corresponding region ER 121' of the input image #1 is minimized. The filter coefficient h122'(i, j) is determined so that a difference between the region ER122 of the first prediction image #16' and the corresponding region ER122' of the input image #1 is minimized. The statistical method can be used to determine a specific value of the filter coefficient hk'(i, j) (k = 121, 122).

The adaptive filter 100 generates and outputs the second output image data #100' by carrying out the filtering as described above.

In general, an optimum filter coefficient varies depending on a value of a motion vector assigned to a partition.

The inter-prediction image generating section 16 operates as described above, so that an adaptive filtering can be carried out separately with respect to (i) a region of a reference image which region is referred to by a region made up of partitions to each of which a motion vector having a value equal to or greater than a predetermined value is assigned and (ii) a region of the reference image, which region is referred to by a region made up of partitions to each of which a motion vector having a value smaller than the predetermined value is assigned.

In the present operation example, it is possible to employ a configuration in which (i) an adaptive filtering is carried out only with respect to the region of the reference image which region is referred to by a region made up of partitions to which a motion vector having a value equal to or greater than the predetermined value is assigned and (ii) a fixed (non-adaptive) filtering, in which a predetermined filter coefficient is used, is carried out with respect to a region of the reference image which region is referred to by a region made up of partitions to which a motion vector having a value smaller than the predetermined value is assigned.

In general, the adaptive filtering is more effective for a region of a reference image referred to by partitions to each of which a motion vector having a larger value is assigned.

With the configuration as described above, it is possible to (i) carry out a fixed (non-adaptive) filtering with respect to a region of a reference image referred to by a region made up of partitions to each of which a vector having a small value is assigned and (ii) carry out an adaptive filtering with respect to a region of the reference image referred to by a region made up of partitions to each of which a motion vector having a large value is assigned. This enables more effective filtering while reducing the processing cost.

In the present operation example, it is possible to employ a configuration in which the first prediction image #16' is divided into two regions depending on (i) whether or not a horizontal component of the motion vector is equal to or greater than a predetermined value or (ii) whether or not a vertical component of the motion vector is equal to or greater than the predetermined value.

The configuration allows filtering to be carried out more appropriately in accordance with a size of each component of the motion vector.

It is also possible to employ a configuration in which the first prediction image #16' is divided into two regions depending on the direction of the motion vector.

(Operation Example 12)

The operation examples described above have dealt with a case in which a target macroblock or a target partition is classified into any of a plurality of regions in accordance with information (skip mode, reference index, etc.) associated with the target macroblock or the target partition. Note, however, that the present invention is not limited to this.

That is, the operation examples described above can employ a configuration in which the target macroblock or the target partition is classified into any of the plurality of regions in accordance with information associated with (i) a macroblock in the vicinity of the target macroblock or (i) a partition in the vicinity of the target partition.

In particular, it is possible to employ a configuration in which the adaptive filter 100 (i) classifies the target macroblock into any of the plurality of regions in accordance with a value of a conversion coefficient in a macroblock in the vicinity of the target macroblock (including a macroblock adjacent to the target macroblock) and (ii) carries out an adaptive filtering with respect to each of the plurality of regions.

It is also possible to employ a configuration in which, in a case where the conversion coefficient of the macroblock in the vicinity of the target macroblock is smaller than a predetermined value, the adaptive filter 100 filters, by means of a fixed (non-adaptive) filter, a region of the reference image which region is referred to by the target macroblock.

In general, a macroblock in which a code amount of a conversion coefficient is small is small in image change within the macroblock, and is therefore an easily predictable region. As such, by (i) using a fixed (non-adaptive) filter in a filtering of a region of a reference image which region is referred to by a macroblock in the vicinity of the macroblock having the small code amount and (ii) using an adaptive filter in a filtering of a region of the reference image which region is referred to by a macroblock in the vicinity of a macroblock having a large code amount of a conversion coefficient, it is possible to carry out more appropriate filtering while reducing the processing cost.

It is also possible to employ a configuration in which the adaptive filter 100 classifies the target macroblock into any of the plurality of regions in accordance with a flatness of an image in a macroblock in the vicinity of the target macroblock.

In general, an optimum filter coefficient varies in accordance with a flatness of a region.

According to the configuration above, filter coefficients of the respective plurality of regions which are determined in accordance with the flatness can be found separately in an adaptive manner. This enables a more efficient filtering.

It is also possible to employ a configuration in which the adaptive filter 100 classifies the macroblock into any of the plurality of regions in accordance with a brightness or a color difference of the image in the macroblock in the vicinity of the target macroblock.

In general, an optimum filter coefficient varies in accordance with brightness or a color difference of a region.

According to the configuration above, filter coefficients of the respective plurality of regions into which the target macroblock has been divided in accordance with the brightness and the color difference can be found separately in an adaptive manner. This enables more efficient filtering.

(Operation example 13)

It is possible to employ a configuration in which the adaptive filter 100 divides the first prediction image #16' into a plurality of regions in accordance with information of a reference image referred to by the first prediction image #16'.

For example, it is possible to employ a configuration in which the adaptive filter 100 divides the first prediction image #16' into two regions depending on whether or not the reference image referred to by the first prediction image #16' is an intra-picture, which is a picture generated by intra prediction.

In general, a prediction mode to be employed varies depending on whether or not a reference image is an intra-picture. Accordingly, an optimum filter coefficient varies depending on whether or not the reference image is an intra-picture.

According to the configuration above, (i) an adaptive filter coefficient of a region in which the reference image is an intra-picture and (ii) an adaptive filter coefficient of a region in which the reference image is not an intra-picture can be separately calculated. This enables an appropriate filtering even in a case where the first prediction image #16' is constituted by (i) a region that refers to an intra-picture and (ii) a region that does not refer to an intra-picture.

It is also possible to employ a configuration in which the adaptive filter 100 divides the first prediction image #16' into a plurality of regions in accordance with a value of a quantization parameter QP in a reference picture referred to by the first prediction image #16'.

For example, it is possible to employ a configuration in which the adaptive filter 100 divides the first prediction image #16' into two regions depending on whether or not a mean value of quantization parameters QP in respective regions of a reference picture that is referred to by macroblocks of the first prediction image #16', which regions correspond to the respective macroblocks, is equal to or higher than a predetermined threshold.

In general, image quality of a reference image varies in accordance with a value of a quantization parameter QP and, accordingly, an optimum filter coefficient varies.

According to the configuration above, the filtering can be carried out more appropriately in accordance with the value of the quantization parameter QP.

It is also possible to employ a configuration in which the adaptive filter 100 divides the first prediction image #16' into two regions depending on whether or not an average of pixel values in a region of the reference image referred to by the first prediction image #16' is equal to or higher than a predetermined threshold.

In general, an optimum filter coefficient differs between a case in which a region of a reference image is flat and a case in which the region of the reference image is not flat.

According to the configuration above, it is possible to determine an adaptive filter coefficient separately for (i) a case in which the region of the reference image is flat and (ii) a case in which the region of the reference image is not flat.

Therefore, by employing the configuration, the appropriate filtering can be carried out more efficiently even in a case where the reference image referred to by the first prediction image #16' includes a flat region and a non-flat region.

It is also possible to employ a configuration in which the adaptive filter 100 divides the first prediction image #16' into a plurality of regions in accordance with information of a macroblock contained in a region of the reference image referred to by the first prediction image #16'.

According to the configuration, the filtering can be carried out more appropriately in accordance with the information of the macroblock contained in the reference image referred to by the first prediction image #16'.

(Configuration of Encoded Data #2)

The following describes, with reference to Fig. 14, a configuration of the encoded data #2 generated with the use of the video encoding device 1.

Fig. 14 is a diagram illustrating a bit stream #BS for each slice of the encoded data #2 which is generated with the use of the video encoding device 1 and which is referred to by the video decoding device 2 described below. As illustrated in Fig. 14, the bit stream #BS includes filter coefficient information FC and macroblock information MB1 through MBN.

The filter coefficient information FC is information including a filter coefficient generated by the adaptive filter 100.

The macroblock information MB1 through MBN (N is the number of macroblocks included in the slice) is information concerning macroblocks included in the slice, and includes macroblock prediction mode #18b, block division information, and the like.

The following more specifically describes how the encoded data #2 outputted by the video encoding device 1 is configured in the above operation examples.

(Configuration Example 1)

A configuration of the encoded data #2 outputted by the video encoding device 1 in Operation Example 1 is as follows.

As has been already described, in Operation Example 1, the video encoding device 1 divides the first prediction image #16' into the first region ER1 made up of macroblocks to which a skip mode is applied and the second region ER2 made up of macroblocks to which the skip mode is not applied, and adaptively calculates the filter coefficient h1' (i, j) and the filter coefficient h2'(i, j) that correspond to the region ER1 and the region ER2, respectively.

The filter coefficient information FC in the encoded data #2 includes the filter coefficient h1'(i, j) and the filter coefficient h2'(i, j) thus calculated.

The macroblock information MB1 through MBN in the encoded data #2 includes information on whether or not the skip mode is applied to the macroblocks.

(Configuration Example 2)

A configuration of the encoded data #2 outputted by the video encoding device 1 in Operation Example 2 is as follows.

As has been already described, in Operation Example 1, the video encoding device 1 divides the first prediction image #16' into the region ER21 made up of partitions having a reference image index ref_idx of 0 and the other region ER22, and adaptively calculates the filter coefficient h21'(i, j) and the filter coefficient h22'(i, j) that correspond to the region ER21 and the region ER22, respectively.

The filter coefficient information FC in the encoded data #2 includes the filter coefficient h21'(i, j) and the filter coefficient h22'(i, j) thus calculated.

The encoded data #2 includes a reference image index that is referred to by the partitions.

(Configuration Example 3)

A configuration of the encoded data #2 outputted by the video encoding device 1 in Operation Example 3 is as follows.

As has been already described, in Operation Example 3, the adaptive filter 100 generates the inter-prediction image #16a in accordance with the operation described in Operation Example 1 and generates the inter-prediction image #16b in accordance with the operation described in Operation Example 2. The adaptive filter 100 selects and outputs a prediction image that is higher in encoding efficiency out of the inter-prediction image #16a and the inter-prediction image #16b.

The filter coefficient information FC in the encoded data #2 includes a filter coefficient which the adaptive filter 100 used in generating the prediction image thus selected.

The encoded data #2 preferably includes a flag indicating by which of the method of Operation Example 1 and the method of Operation Example 2 the prediction image has been generated. That is, the encoded data #2 preferably includes a flag indicating whether the filter coefficient included in the encoded data #2 is a filter coefficient calculated with reference to the skip mode or a filter coefficient calculated with reference to the reference image index.

Note that it is possible to employ a configuration in which the encoded data #2 does not include the flag indicating by which method the prediction image has been generated, in a case where the adaptive filter 100 selects the inter-prediction image #16a or the inter-prediction image #16b with reference to a difference in area between the region ER1 and the region ER2 in Operation Example 1 and a difference in area between the region ER21 and the region ER22 in Operation Example 2, as described in Operation Example 3. This is because in a case where the above differences in area are obtained, the video decoding device for decoding the encoded data #2 is capable of determining, without the need for referring to the flag, by which of the method of Operation Example 1 and the method of Operation Example 2 the prediction image has been generated.

(Configuration Example 4)

A configuration of the encoded data #2 outputted by the video encoding device 1 in Operation Example 4 is as follows.

As has been already described, in Operation Example 4, the adaptive filter 100 (i) divides the regions of the first prediction image #16' into the region ER41 and the region ER42 on the basis of a predetermined criterion, (ii) divides the input image #1 into the region ER41' and the region ER42' which correspond to the region ER41 and the region ER42, respectively, and (iii) adaptively calculates the filter coefficient h41'(i, j) and the filter coefficient h42'(i, j) which correspond to the region ER41' and the region ER42', respectively.

The filter coefficient information FC in the encoded data #2 includes the filter coefficient h41'(i, j) and the filter coefficient h42'(i, j) thus calculated.

The encoded data #2 includes a flag indicating to which of the region ER41' and the region ER42' each of the regions of the reference image corresponds.

For example, in Operation Example 4, in a case where the adaptive filter 100 divides the macroblocks included in the first prediction image #16' into the region ER41 and the region ER42 on the basis of the predetermined criterion, the macroblock information MB1 through MBN in the encoded data #2 includes a flag indicating to which of the region ER41' and the region ER42' each of the macroblocks belongs.

In a case where a plurality of predetermined criteria exist, the encoded data #2 preferably includes a flag indicating by which of the criteria the regions included in the first prediction image #16' has been classified by the video encoding device 1.

(Configuration Example 5)

A configuration of the encoded data #2 outputted by the video encoding device 1 in Operation Example 5 is as follows.

As has been already described, in Operation Example 5, for example, the adaptive filter 100 (i) divides the first prediction image #16' into the region ER51 and the region ER52 depending on an average pixel value in the regions of the input image #1 which correspond to the respective macroblocks included in the first prediction image #16', (ii) divides the input image #1 into the region ER51' and the region ER52' that correspond to the region ER51 and the region ER52, respectively, and (iii) adaptively calculates the filter coefficient h51'(i, j) and the filter coefficient h52'(i, j) that correspond to the region ER51' and the region ER52', respectively.

The filter coefficient information FC in the encoded data #2 includes the filter coefficient h51'(i, j) and the filter coefficient h52'(i, j) thus calculated.

The macroblock information MB1 through MBN in the encoded data #2 includes a flag indicating to which of the regions each of the macroblocks belongs.

The same applies to a case where the adaptive filter 100 divides the first prediction image #16' with reference to a prediction difference.

(Configuration Example 6)

A configuration of the encoded data #2 outputted by the video encoding device 1 in Operation Example 6 is as follows.

As has been already described, in Operation Example 6, in a case where one of the two regions of the first prediction image #16' having been divided in Operation Examples 1 through 5 has an area ratio, with respect to the first prediction image #16', equal to or smaller than the predetermined area ratio, the adaptive filter 100 (i) filters, with the use of the standard filter coefficient, a region of the reference image #14b which region is referred to by the one of the two regions and (ii) filters, with the use of the adaptive filter coefficient calculated by use of the statistical method, a region of the reference image #14b which region is referred to by the other one of the two regions.

The filter coefficient information FC in the encoded data #2 includes the adaptive filter coefficient thus calculated. The encoded data #2 preferably includes a flag indicative of the region for which the standard filter coefficient has been used.

Further, the encoded data #2 preferably includes a flag indicating that a plurality of adaptive filters are not used, in the configuration in which in a case where one of the two regions of the first prediction image #16' having been divided in Operation Examples 1 through 5 has an area ratio, with respect to the first prediction image #16', equal to or smaller than the predetermined area ratio, the adaptive filter 100 adaptively calculates a filter coefficient for the entire first prediction image #16' that has not been divided yet.

(Configuration Example 7)

A configuration of the encoded data #2 outputted by the video encoding device 1 in Operation Example 7 is as follows.

As has been already described, in Operation Example 7, in a case where an area ratio of a region referring to a reference picture whose reference image index ref_idx is not 0 with respect to the first prediction image #16' is smaller than a predetermined area ratio, the adaptive filter 100 calculates an adaptive filter coefficient for a region referring to a reference picture whose reference image index ref_idx is 0, and filters a region on a reference picture whose reference image index ref_idx is not 0 which region corresponds to the region referring to the reference picture whose reference image index ref_idx is not 0, for example, with the use of a filter coefficient having an edge enhancement effect. The filter coefficient having an edge enhancement effect can be a predetermined filter coefficient.

The filter coefficient information FC in the encoded data #2 includes the adaptive filter coefficient thus calculated.

The encoded data #2 includes the reference image indices of the reference pictures referred to by the respective regions.

In the present configuration example, there is a case where the reference image index ref_idx functions as an index indicating whether adaptive filtering is carried out or non-adaptive filtering is carried out with the use of the filter coefficient having an edge enhancement effect.

Accordingly, the encoded data #2 preferably includes a flag for selecting whether a value stored as the reference image index ref_idx represents an identification number for a reference image, which is the original meaning, or indicates that the reference image index ref_idx is used for selection of a filter.

(Configuration Example 8)

A configuration of the encoded data #2 outputted by the video encoding device 1 in Operation Example 8 is as follows.

As has been already described, in Operation Example 8, in a case where a reference image whose reference image list number is 1 has a weight of contribution that is lighter than a predetermined weight with respect to a region of the first prediction image #16' which region refers to the reference image whose reference image list number is 1, the adaptive filter 100 (i) calculates an adaptive filter coefficient for a region referring to a reference image whose reference image list number is 0 and (ii) filters a region of the reference image whose reference image list number is 0 which region corresponds to the region referring to the reference image whose reference image list number is 1, for example, with the use of a filter coefficient having an edge enhancement effect. The filter coefficient having an edge enhancement effect can be a predetermined filter coefficient.

The filter coefficient information FC in the encoded data #2 includes the adaptive filter coefficient thus calculated.

The encoded data #2 includes the reference image list numbers of the reference images referred to by the respective regions.

In the present configuration example, there is a case where the reference image list number functions as an index indicating whether adaptive filtering is carried out or non-adaptive filtering is carried out with the use of the filter coefficient having an edge enhancement effect.

Accordingly, the encoded data #2 preferably includes a flag for selecting whether a value stored as the reference image list number represents a number for identifying a reference image list, which is the original meaning, or indicates that the reference image list number is used for selection of a filter.

(Configuration Example 9)

A configuration of the encoded data #2 outputted by the video encoding device 1 in Operation Example 9 is as follows.

As has been already described, in Operation Example 9, the adaptive filter 100 divides the input image #1 into the region ER101', which is an upper half of the image, and the region ER102', which is the lower half of the image, and adaptively calculates the filter coefficient h101'(i, j) and the filter coefficient h102'(i, j) which correspond to a region of the reference image #14b which region is referred to by the region ER101' and a region of the reference image #14b which region is referred to by the region ER102', respectively.

The filter coefficient information FC in the encoded data #2 includes the filter coefficient h101'(i, j) and the filter coefficient h102'(i, j) thus calculated.

In an arrangement in which the adaptive filter 100 filters the region of the reference image #14b which region is referred to by the region ER102', which is the lower half of the image, with the use of a predetermined filter coefficient instead of the adaptive filtering, the filter coefficient information FC in the encoded data #2 includes the filter coefficient h101'(i, j).

(Configuration Example 10)

A configuration of the encoded data #2 outputted by the video encoding device 1 in Operation Example 10 is as follows.

As has been already described, in Operation Example 10, the adaptive filter 100 (i) divides the first prediction image #16' into the region ER111 made up of blocks each having a size equal to or larger than a predetermined size and the region ER112 made up of blocks each having a size smaller than the predetermined size, (ii) divides the input image #1 into the region ER111' and the region ER112' which correspond to the region ER111 and the region ER112, respectively, and (iii) adaptively calculates the filter coefficient h111'(i, j) and the filter coefficient h112'(i, j) which correspond to the region ER111' and the region ER112', respectively.

The filter coefficient information FC in the encoded data #2 includes the filter coefficient h111'(i, j) and the filter coefficient h112'(i, j) thus calculated.

In an arrangement in which the adaptive filter 100 filters, with the use of a predetermined filter coefficient, a region of the reference image #14b which region is referred to by the region ER111 made up of blocks each having a size equal to or larger than a predetermined size, the filter coefficient information FC in the encoded data #2 includes the filter coefficient h112'(i, j).

(Configuration Example 11)

A configuration of the encoded data #2 outputted by the video encoding device 1 in Operation Example 11 is as follows.

As has been already described, in Operation Example 11, the adaptive filter 100 (i) divides the first prediction image #16' into the region ER121 made up of partitions to which a motion vector having a value equal to or larger than a predetermined value is assigned and the region ER122 made up of partitions to which a motion vector having a value smaller than the predetermined value is assigned, (ii) divides the input image #1 into the region ER 121' and the region ER 122' which correspond to the region ER121 and the region ER122, respectively, and (iii) adaptively calculates the filter coefficient h121'(i, j) and the filter coefficient h122'(i, j) which correspond to the region ER121' and the region ER122', respectively.

The filter coefficient information FC in the encoded data #2 includes the filter coefficient h121'(i, j) and the filter coefficient h122'(i, j) thus calculated.

In the present operation example, the filter coefficient information FC in the encoded data #2 includes the filter coefficient h121'(i, j) in an arrangement in which (i) adaptive filtering is carried out only with respect to a region of the reference image #14b which region is referred to by the region ER121 made up of the partitions to which the motion vector having a value equal to or larger than the predetermined value is assigned and (ii) fixed (non-adaptive) filtering using a predetermined filter coefficient is carried out with respect to a region of the reference image #14b which region is referred to by the region ER122 made up of partitions to which the motion vector having a value smaller than the predetermined value is assigned.

(Configuration Example 12)

A configuration of the encoded data #2 outputted by the video encoding device 1 in Operation Example 12 is as follows.

As has been already described, in Operation Example 12, the adaptive filter 100 classifies a macroblock into any one of a plurality of regions in accordance with a value of a conversion coefficient in macroblocks in the vicinity of the macroblock (including adjacent macroblocks) and adaptively calculates filter coefficients corresponding to the respective regions.

The filter coefficient information FC in the encoded data #2 includes the adaptive filter coefficients thus calculated.

In a case where fixed (non-adaptive) filtering is carried out with respect to any of the plurality of regions and where a filter coefficient for carrying out the fixed (non-adaptive) filtering is stored in the video decoding device for decoding the encoded data #2, it is unnecessary that the filter coefficient information FC in the encoded data #2 include the filter coefficient for carrying out the fixed (non-adaptive) filtering. In this case, however, the encoded data #2 preferably includes a flag indicative of the region to which the fixed (non-adaptive) filtering has been carried out.

The almost same applies to the other cases described in Operation Example 12.

(Configuration Example 13)

A configuration of the encoded data #2 outputted by the video encoding device 1 in Operation Example 13 is as follows.

As has been already described, in Operation Example 13, the adaptive filter 100 divides the first prediction image #16' into two regions in accordance with whether or not a reference image referred to by the first prediction image #16' is an intra-picture, i.e., a picture generated by intra-prediction, and adaptively calculates filter coefficients corresponding to the respective regions.

The filter coefficient information FC in the encoded data #2 includes the adaptive filter coefficients thus calculated.

The almost same applies to a case where the adaptive filter 100 divides the first prediction image #16' into a plurality of regions with reference to a quantization parameter QP.

(Video Decoding Device 2)

The following describes the video decoding device 2 of the present invention with reference to Figs. 12 and 13.

The video decoding device 2 is a video decoding device, part of which uses the H.264/AVC standard and the technique used in the KTA software.

Fig. 12 is a block diagram illustrating a configuration of the video decoding device 2.

As illustrated in Fig. 12, the video decoding device 2 includes a variable-length-code decoding section 23, a motion vector reconstructing section 24, a buffer memory 25, an inter-prediction image generating section 26, an intra-prediction image generating section 27, a prediction mode determining section 28, an inverse-quantizing and inverse-converting section 29, and an adder 30.

The video decoding device 2 receives the encoded data #2 and outputs a decoded image #3.

The variable-length-code decoding section 23 variable-length decodes the encoded data #2 and outputs a differential motion vector #23a, side information #23b, quantized prediction residual data #23c, and filter coefficient information #23d. The filter coefficient information #23d includes information corresponding to the filter coefficient #101.

The motion vector reconstructing section 24 decodes a motion vector #24 of a target partition on the basis of the differential motion vector #23a and a motion vector #25a that has been decoded and stored in the buffer memory 25.

In the buffer memory 25, the decoded image #3, the motion vector #24, and the side information #23b are stored.

The inter-prediction image generating section 26 generates an inter-prediction image #26 on the basis of (i) the motion vector #24 that has been decoded by the motion vector reconstructing section 24 and supplied via the buffer memory 25 and (ii) a reference image #25d stored in the buffer memory 25. Note that a motion vector #25c includes an identical motion vector to the motion vector #24. To the inter-prediction image generating section 26, the side information #23b and the filter coefficient information #23d are supplied.

A configuration of the inter-prediction image generating section 26 is described later in detail, and is not described here.

The intra-prediction image generating section 27 generates an intra-prediction image #27 on the basis of a locally decoded image #25b which is stored in the buffer memory 25 and which is part of an image having a target macroblock.

The prediction mode determining section 28 selects any one of the intra-prediction image #27 and the inter-prediction image #26 on the basis of prediction mode information included in the side information #23b, and outputs the selected one as a prediction image #28.

The inverse-quantizing and inverse-converting section 29 carries out inverse quantization and inverse DCT with respect to the quantized prediction residual data #23c and outputs a prediction residual #29.

The adder 30 adds the prediction residual #29 and the prediction image #28 together, and outputs the sum of the prediction residual #29 and the prediction image #28 as the decoded image #3. The decoded image #3 thus outputted is supplied to the buffer memory #3.

(Inter-Prediction Image Generating Section 26)

Fig. 13 is a block diagram illustrating a configuration of the inter-prediction image generating section 26. As illustrated in Fig. 13, the inter-prediction image generating section 26 includes a prediction image generating section 26a and an adaptive filter 100".

The adaptive filter 100" carries out filtering with respect to the reference image #25d stored in the buffer memory 25 so as to generate output image data #100"', and then outputs the output image data #100"'. The filtering is carried out on the basis of the filter coefficient information #23d decoded from the encoded data #2.

Further, the side information #23b is supplied to the adaptive filter 100". Here, it is assumed that the side information #23b includes information indicating whether the target block is a bidirectionally predicted block or a unidirectionally predicted block, information indicating whether or not the skip mode is applied to the target macroblock, prediction mode information indicating whether the target macroblock is an intra-predicted macroblock or an inter-predicted macroblock, and the quantization parameter QP associated with the target block.

The prediction image generating section 26a carries out motion compensation using the motion vector #25c with respect to the output image data #100"' so as to generate the inter-prediction image #26, and then outputs the inter-prediction image #26.

The following describes in more detail how the adaptive filter 100" operates in a case where the encoded data #2 described in Configuration Examples 1 through 13 is decoded.

(Decoding Operation Example 1)

The adaptive filter 100" operates as follows in a case where the encoded data #2 described in Configuration Example 1 is decoded.

With reference to information which is included in the macroblock information MB1 through MBN in the encoded data #2 and which indicates whether or not the skip mode is applied to the macroblocks, the adaptive filter 100" (i) filters the macroblocks to which the skip mode is applied, with the use of the filter coefficient h1'(i, j) included in the filter coefficient information FC in the encoded data #2 and (ii) filters the macroblocks to which the skip mode is not applied, with the use of the filter coefficient h2'(i, j) included in the filter coefficient information FC in the encoded data #2.

(Decoding Operation Example 2)

The adaptive filter 100" operates as follows in a case where the encoded data #2 described in Configuration Example 2 is decoded.

With reference to information which is included in the encoded data #2 and which is information concerning the reference image index ref_idx referred to by the partitions, the adaptive filter 100" (i) filters the partitions having a reference image index ref_idx of 0 with the use of the filter coefficient h21'(i, j) included in the filter coefficient information FC in the encoded data #2 and (ii) filters the partitions having a reference image index ref_idx which is not 0 with the use of the filter coefficient h22'(i, j) included in the filter coefficient information FC in the encoded data #2.

(Decoding Operation Example 3)

The adaptive filter 100" operates as follows in a case where the encoded data #2 described in Configuration Example 3 is decoded.

First, the adaptive filter 100" determines, with reference to the flag included in the encoded data #2, whether the filter coefficient included in the filter coefficient information FC in the encoded data #2 is a filter coefficient calculated with reference to the skip mode or a filter coefficient calculated with reference to the reference image index ref_idx.

In a case where the filter coefficient included in the filter coefficient information FC in the encoded data #2 is the filter coefficient calculated with reference to the skip mode, the adaptive filter 100" (i) filters the macroblocks to which the skip mode is applied, with the use of the filter coefficient h1'(i, j) included in the filter coefficient information FC in the encoded data #2 and (ii) filters the macroblocks to which the skip mode is not applied, with reference to the filter coefficient h2'(i, j) included in the filter coefficient information FC in the encoded data #2.

Meanwhile, in a case where the filter coefficient included in the filter coefficient information FC in the encoded data #2 is the filter coefficient calculated with reference to the reference image index ref_idx, the adaptive filter 100" (i) filters the partitions having a reference image index ref_idx of 0, with the use of the filter coefficient h21'(i, j) included in the filter coefficient information FC in the encoded data #2 and (ii) filters the partitions having a reference image index ref_idx which is not 0, with the use of the filter coefficient h22'(i, j) included in the filter coefficient information FC in the encoded data #2.

(Decoding Operation Example 4)

The adaptive filter 100" operates as follows in a case where the encoded data #2 described in Configuration Example 4 is decoded.

The adaptive filter 100" classifies the regions of the inter-prediction image #26 that is being generated into ones belonging to a region ER41" and ones belonging to a region ER42" on the basis of a predetermined criterion. Further, the adaptive filter 100" sets, as a region ER~41", a region of the reference image #25d which region is referred to for prediction of the region ER41" and sets, as a region ER~42", a region of the reference image #25d which region is referred to for prediction of the region ER42".

The adaptive filter 100" filters the region ER-41" and the region ER~42" with the use of the filter coefficient h41'(i, j) and the filter coefficient h42'(i, j) included in the filter coefficient information FC in the encoded data #2, respectively. The region ER~41" and the region ER~41" correspond to the region ER~41' and the region ER~41' described in Operation Example 4, respectively.

In a case where a plurality of predetermined criteria are present, the adaptive filter 100" classifies the macroblocks on the basis of a criterion, out of the plurality of predetermined criteria, which is designated by a flag included in the encoded data #2, and filters regions referred to by the macroblocks thus classified, with the use of respective filter coefficients which are selected depending on the classification from the filter coefficients included in the filter coefficient information FC in the encoded data #2.

The predetermined criterion is identical to the criterion used in the video encoding device. For example, the adaptive filter 100" allocates each macroblock to a group to which a larger number of macroblocks out of a plurality of macroblocks adjacent to the macroblock belong. Note, however, that the present invention is not limited to this.

(Decoding Operation Example 5)

The adaptive filter 100" operates as follows in a case where the encoded data #2 described in Configuration Example 5 is decoded.

The adaptive filter 100" divides the inter-prediction image #26 that is being generated into a region ER51" and a region ER52" with reference to the flag included in the macroblock information MB1 through MBN in the encoded data #2. Further, the adaptive filter 100" sets, as a region ER~51", a region of the reference image #25d which region is referred to for prediction of the region ER51" and sets, as a region ER~52", a region of the reference image #25d which region is referred to for prediction of the region ER52".

The adaptive filter 100" filters the region ER-51" and the region ER~52" with the use of the filter coefficient h51' (i, j) and the filter coefficient h52'(i, j) included in the filter coefficient information FC in the encoded data #2, respectively. The region ER~51" and the region ER~52" correspond to the region ER~51' and the region ER~52' described in Operation Example 5, respectively.

The adaptive filter 100" may be configured to (i) divide the inter-prediction image #26 that is being generated into the region ER51" and the region ER52" in accordance with a condition using an average pixel value in the regions of the reference image #25d which are referred to for generation of a prediction image and (ii) filter the region ER~51" and the region ER~52", which are referred to by the region ER51" and the region ER52", respectively, with the use of the filter coefficient h51'(i, j) and the filter coefficient h52'(i, j) included in the filter coefficient information FC in the encoded data #2, respectively. In this case, as long as the same condition is used in the video encoding device side, appropriate filtering can be carried out with respect to the regions even in a case where the encoded data #2 does not include the flag indicating which of the regions each macroblock belongs to.

(Decoding Operation Example 6)

The adaptive filter 100" operates as follows in a case where the encoded data #2 described in Configuration Example 6 is decoded.

First, the adaptive filter 100" divides, with reference to the flag included in the encoded data #2, the inter-prediction image #26 that is being generated into (i) a region corresponding to a region of the reference image #25d to which region the standard filter should be applied and (ii) a region corresponding to a region of the reference image #25d to which region the filter coefficient included in the encoded data #2 should be applied.

Next, the adaptive filter 100" (i) filters, with the use of the standard filter, the region to which the standard filter should be applied and (ii) filters, with the use of the filter coefficient included in the filter coefficient information FC in the encoded data #2, the region to which the filter coefficient included in the encoded data #2 should be applied.

Such a configuration is possible in which, in a case where one of the two regions of the first prediction image #16' having been divided has an area ratio, with respect to the first prediction image # 16', equal to or smaller than the predetermined area ratio, the video encoding device 1 adaptively calculates a filter coefficient for the entire first prediction image #16' that has not been divided yet. In this configuration, the adaptive filter 100" filters, with the use of the filter coefficient included in the filter coefficient information FC in the encoded data #2, the entire regions to be referred to or each region to be referred to, depending on a flag which is included in the encoded data #2 and which indicates whether or not a filter should be applied to the entire region referred to by the inter-prediction image #26 that is being generated.

The adaptive filter 100" may be configured to (i) filter, with the use of the filter coefficient included in the filter coefficient information FC in the encoded data #2, a region of the reference image #25d which region corresponds to a region, out of a plurality of regions of the inter-prediction image #26 that is being generated, whose area ratio with respect to the inter-prediction image #26 is larger than a predetermined area ratio and (ii) filters, with the use of the standard filter, a region of the reference image #25d which region corresponds to a region, out of the plurality of regions of the inter-prediction image #26 that is being generated, whose area ratio with respect to the inter-prediction image #26 is equal to or smaller than the predetermined area ratio.

With the configuration, the adaptive filter 100" can generate and output output image data #100'" even in a case where no flag is included in the encoded data #2. This makes it possible to carry out efficient filtering while reducing a code amount of the encoded data #2.

(Decoding Operation Example 7)

The adaptive filter 100" operates as follows in a case where the encoded data #2 described in Configuration Example 7 is decoded.

In the present operation example, there is a case where the reference image index ref_idx functions as an index indicating whether adaptive filtering is carried out or non-adaptive filtering is carried out with the use of a filter coefficient having an edge enhancement effect.

First, the adaptive filter 100" judges whether or not an area ratio of a region of the inter-prediction image #26 that is being generated which region has a reference image index of 1 with respect to the whole inter-prediction image #26 is smaller than a predetermined area ratio.

In a case where the area ratio is equal to or larger than the predetermined area ratio, the adaptive filter 100" filters, out of the reference image #25d, (i) a region of a reference picture whose reference image index is 0 which region is referred to in a case where the inter-prediction image #26 is generated and (ii) a region of a reference picture whose reference image index is 1 which region is referred to in a case where the inter-prediction image #26 is generated, with the use of filter coefficients which are included in the filter coefficient information FC in the encoded data #2 and which correspond to the respective regions.

In a case where the area ratio is smaller than the predetermined area ratio, the adaptive filter 100" filters, out of the reference image #25d, a region of a reference picture whose reference image index is 0 which region is referred to in a case where the inter-prediction image #26 is generated, with the use of the filter coefficient included in the filter coefficient information FC in the encoded data #2. Further, in a case where the area ratio is smaller than the predetermined area ratio, the adaptive filter 100" does not use a reference picture whose reference image index is 1 with respect to a region that is referred to with designation of a reference image index of 1, and filters a region of a reference picture whose reference image index is 0, for example, with the use of a filter coefficient having an edge enhancement effect, and outputs the region thus filtered as a region to be referred to in a case where the inter-prediction image #26 is generated. The filter coefficient having an edge enhancement effect can be a predetermined filter coefficient.

In a case where the encoded data #2 includes a flag indicating whether or not a value stored as the reference image index ref_idx indicates the original meaning, this flag can be referred to, and therefore the judgment concerning the area ratio becomes unnecessary.

(Decoding Operation Example 8)

The adaptive filter 100" operates as follows in a case where the encoded data #2 described in Configuration Example 8 is decoded.

In the present operation example, there is a case where the reference image list number functions as an index indicating whether adaptive filtering is carried out or non-adaptive filtering is carried out with the use of the filter coefficient having an edge enhancement effect.

First, the adaptive filter 100" judges, for the inter-prediction image #26 that is being generated, whether or not a weight of contribution of a reference picture whose reference image list number is 1 is smaller than a predetermined weight.

In a case where the weight is equal to or larger than the predetermined weight, the adaptive filter 100" filters (i) a region of a reference picture whose reference image list number is 0 which region is referred to in a case where the inter-prediction image #26 is generated and (ii) a region of a reference picture whose reference image list number is 1 which region is referred to in a case where the inter-prediction image #26 is generated, with the use of filter coefficients which are included in the filter coefficient information FC in the encoded data #2 and which correspond to the respective regions.

In a case where the weight is smaller than the predetermined weight, the adaptive filter 100" filters, out of the reference image #25d, a region of a reference picture whose reference image list number is 0 which region is referred to in a case where the inter-prediction image #26 is generated, with the use of the filter coefficient included in the filter coefficient information FC in the encoded data #2. Further, in a case where the weight is smaller than the predetermined weight, the adaptive filter 100" does not use a reference picture whose reference image list number is 1 with respect to a region referred to with designation of a reference image list number of 1, and filters a region of a reference picture whose reference image list number is 0, for example, with the use of a filter coefficient having an edge enhancement effect, and outputs the region thus filtered as a region to be referred to in a case where the inter-prediction image #26 is generated. The filter coefficient having an edge enhancement effect can be a predetermined filter coefficient.

In a case where the encoded data #2 includes a flag indicating whether or not a value stored as the reference image list number indicates the original meaning, this flag can be referred to, and therefore the judgment concerning the weight of contribution becomes unnecessary.

(Decoding Operation Example 9)

The adaptive filter 100" operates as follows in a case where the encoded data #2 described in Configuration Example 9 is decoded.

The adaptive filter 100" divides the inter-prediction image #26 that is being generated into an upper-half region of the image and a lower-half region of the image, and filters regions of the reference image #25d which are referred to by the upper-half region of the image and the lower-half region of the image, respectively, with the use of the filter coefficient h101'(i, j) and the filter coefficient h102'(i, j) included in the filter coefficient information FC in the encoded data #2, respectively.

In an arrangement in which the adaptive filter 100 in the video encoding device 1 filters a region which is a region on the reference image #14b and which is a region of the reference image #25d that is referred to by the lower-half of the image with the use of a predetermined filter coefficient instead of carrying out the adaptive filtering, the adaptive filter 100" (i) filters a region of the reference image #25d which region is referred to by the upper-half region of the image, with the use of the filter coefficient h101'(i, j) included in the filter coefficient information FC in the encoded data #2, and (ii) filters the region of the reference image #25d which region is referred to by the lower-half region of the image, with the use of the predetermined filter coefficient.

(Decoding Operation Example 10)

The adaptive filter 100" operates as follows in a case where the encoded data #2 described in Configuration Example 10 is decoded.

The adaptive filter 100" (i) filters a region of the reference image #25d which region is referred to by the macroblocks having a size equal to or larger than a predetermined size, with the use of the filter coefficient h111'(i, j) included in the filter coefficient information FC in the encoded data #2 and (ii) filters the macroblocks having a size smaller than the predetermined size, with the use of the filter coefficient h112'(i, j) included in the filter coefficient information FC in the encoded data #2.

In an arrangement in which the adaptive filter 100 in the video encoding device 1 filters, with the use of a predetermined filter coefficient, a region of the reference image #25d which region is referred to by the region made up of the macroblocks each having a size equal to or larger than the predetermined size, the adaptive filter 100" (i) filters the region of the reference image #25d which region is referred to by the macroblocks each having a size equal to or larger than the predetermined size, with the use of the predetermined filter coefficient and (ii) filters a region of the reference image #25d which region is referred to by the macroblocks having a size smaller than the predetermined size, with the use of the filter coefficient h112'(i, j) included in the filter coefficient information FC in the encoded data #2.

(Decoding Operation Example 11)

The adaptive filter 100" operates as follows in a case where the encoded data #2 described in Configuration Example 11 is decoded.

The adaptive filter 100" (i) filters a region of the reference image #25d which region is referred to by the partitions to which a motion vector having a value equal to or larger than a predetermined value is assigned, with the use of the filter coefficient h121'(i, j) included in the filter coefficient information FC in the encoded data #2, and (ii) filters a region of the reference image #25d which region is referred to by the partitions to which a motion vector having a value smaller than the predetermined value is assigned, with the use of the filter coefficient h122'(i, j) included in the filter coefficient information FC in the encoded data #2.

Such an arrangement is possible in which the adaptive filter 100 in the video encoding device 1 carries out adaptive filtering only with respect to a region of a reference image which is referred to by a region made up of the partitions to which the motion vector having a value equal to or larger than the predetermined value is assigned, and carries out fixed (non-adaptive) filtering using a predetermined filter coefficient with respect to a region of a reference image which is referred to by a region made up of the partitions to which the motion vector having a value smaller than the predetermined value is assigned. In this arrangement, the adaptive filter 100" (i) filters the region of the reference image which is referred to by the region made up of the partitions to which the motion vector having a value equal to or larger than the predetermined value is assigned, with the use of the filter coefficient h121'(i, j) included in the filter coefficient information FC in the encoded data #2 and (ii) filters the region of the reference image which is referred to by the partitions to which the motion vector having a value smaller than the predetermined value is assigned, with the use of the fixed (non-adaptive) filter coefficient. The fixed (non-adaptive) filter coefficient can be a predetermined filter coefficient.

(Decoding Operation Example 12)

The adaptive filter 100" operates as follows in a case where the encoded data #2 described in Configuration Example 12 is decoded.

The adaptive filter 100" classifies each of the macroblocks into any one of a plurality of groups on the basis of a value of a conversion coefficient in macroblocks in the vicinity of the macroblock (including adjacent macroblocks), and filters regions of the reference image #25d which are referred to by the respective groups of the macroblocks with the use of filter coefficients included in the filter coefficient information FC in the encoded data #2.

In a case where the video encoding device 1 carries out fixed (non-adaptive) filtering with respect to any of the regions on the reference image #14b which correspond to the plurality of regions and where a filter coefficient for carrying out the fixed (non-adaptive) filtering is stored in the video decoding device 2, the adaptive filter 100" carries out fixed (non-adaptive) filtering with respect to a region corresponding to the region to which the fixed (non-adaptive) filtering has been carried out by the video encoding device 1, and carries out filtering using a filter coefficient included in the filter coefficient information FC in the encoded data #2 with respect to the other regions.

The almost same applies to the other cases described in Operation Example 12.

(Decoding Operation Example 13)

The adaptive filter 100" operates as follows in a case where the encoded data #2 described in Configuration Example 12 is decoded.

The adaptive filter 100" divides the inter-prediction image #26 that is being generated into two regions in accordance with whether a reference picture included in the reference image #25d to which reference picture a region referred to by the partitions belongs is an intra-picture or not, and filters reference pictures referred to by the respective regions with the use of filter coefficients included in the filter coefficient information FC in the encoded data #2.

The almost same applies to a case where the adaptive filter 100 divides the inter-prediction image #26 that is being generated into a plurality of regions with reference to a quantization parameter QP.

(Others)

As above described, the encoding device of the present invention includes: a first filter configured to act on a reference image obtained by encoding and reconfiguring an input image; first predicting means for generating a first prediction image by carrying out motion compensation with reference to an output image obtained through the first filter; a second filter configured to act on the reference image; second predicting means for generating a second prediction image by carrying out motion compensation with reference to an output image obtained through the second filter; dividing means for dividing each of the first prediction image and the input image into a plurality of regions; and filter coefficient setting means for setting a filter coefficient of the second filter so that a difference between the input image and the first prediction image is minimized for each of the plurality of regions, said encoding device encoding residual data indicative of a difference between the input image and the second prediction image.

According to the encoding device of the present invention thus configured, the encoding device includes (i) the dividing means for dividing each of the first prediction image and the input image into a plurality of regions and (ii) the filter coefficient setting means for setting a filter coefficient of the second filter so that a difference between the input image and the first prediction image is minimized for each of the plurality of regions. With the configuration, it is possible to adaptively set the filter coefficient of the second filter for each of the plurality of regions, even in a case where regions of the first prediction image are not uniform in characteristics.

In other words, even in a case where the reference image (locally decoded image), based on which the first prediction image is generated, has nonuniform characteristics, it is possible to appropriately carry out filtering by adaptively setting the filter coefficient of the second filter for each of the plurality of regions.

It is preferable that the dividing means divides the first prediction image into (i) a region made up of macroblocks to which a skip mode is applied and (ii) a region made up of macroblocks to which the skip mode is not applied.

In general, optimal filter coefficients are different between (i) a macroblock to which the skip mode is applied and (ii) a macroblock to which the skip mode is not applied.

According to the configuration of the present invention, the first prediction image is divided into (i) the region made up of macroblocks to which the skip mode is applied and (ii) the region made up of macroblocks to which the skip mode is not applied, and it is possible to set the filter coefficient of the second filter so that a difference between the input image and the first prediction image is minimized for each of the regions.

This makes it possible to carry out appropriate filtering, even in a case where the first prediction image includes (i) the macroblocks to which the skip mode is applied and (ii) the macroblocks to which the skip mode is not applied.

It is preferable that the dividing means divides the first prediction image into (i) a region made up of partitions referring to an image having a reference image index of zero and (ii) a region made up of partitions referring to an image having a reference image index which is not zero.

In general, particularly in a case of a video of a movement, optimal filter coefficients are different for regions which refer to respective reference pictures having different reference image indexes.

According to the configuration, the first prediction image is divided into (i) the region made up of partitions referring to the image having the reference image index of zero and (ii) the region made up of partitions referring to the image having the reference image index which is not zero, and it is possible to set the filter coefficient of the second filter so that a difference between the input image and the first prediction image is minimized for each of the regions.

34

This makes it possible to carry out appropriate filtering, even in a case where the first prediction image includes (i) the partitions referring to the image having the reference image index of zero and (ii) the partitions referring to the image having the reference image index which is not zero.

It is preferable that the dividing means includes first dividing means and second dividing means; the filter coefficient setting means includes first filter coefficient setting means and second filter coefficient setting means; the first dividing means divides the first prediction image into (i) a first region made up of macroblocks to which a skip mode is applied and (ii) a second region made up of macroblocks to which the skip mode is not applied; the first filter coefficient setting means determines a first preliminary filter coefficient for each of the first region and the second region so that a difference between the first prediction image and the input image is minimized; the second dividing means divides the first prediction image into (i) a third region made up of partitions referring to an image having a reference image index of zero and (ii) a fourth region made up of partitions referring to an image having a reference image index which is not zero; the second filter coefficient setting means determines a second preliminary filter coefficient for each of the third region and the fourth region so that a difference between the first prediction image and the input image is minimized; and one that is higher in encoding efficiency out of the first preliminary filter coefficient and the second preliminary filter coefficient is set to be the filter coefficient of the second filter.

In general, optimal filter coefficients are different between (i) a macroblock to which the skip mode is applied and (ii) a macroblock to which the skip mode is not applied. Moreover, in general, optimal filter coefficients are different for regions which refer to respective reference pictures having different reference image indexes.

Moreover, encoding efficiency is different between (i) adaptive filtering carried out with reference to whether or not a skip mode is applied and (ii) adaptive filtering carried out with reference to a reference image index.

According to the configuration of the present invention, it is possible to set, as the filter coefficient of the second filter, one which is higher in encoding efficiency out of (i) the first preliminary filter coefficient adaptively set depending on whether or not the skip mode is applied to the region and (ii) the second preliminary filter coefficient adaptively set in accordance with the reference image index. This makes it possible to carry out filtering with better encoding efficiency.

It is preferable that the dividing means divides the first prediction image into the plurality of regions by allocating each unit region of the first prediction image to a region to which a larger number of macroblocks out of a plurality of macroblocks adjacent to a macroblock including the each unit region belong.

According to the configuration, the first prediction image is divided into the plurality of regions by allocating each unit region of the first prediction image to a region to which a larger number of macroblocks out of the adjacent macroblocks belong, and it is possible to set the filter coefficient of the second filter so that a difference between the input image and the first prediction image is minimized for each of the plurality of regions.

With the configuration, it is possible to carry out more appropriate filtering.

It is preferable that the dividing means divides the first prediction image into (i) a region made up of macroblocks having an average luminance higher than a predetermined luminance and (ii) a region made up of macroblocks having an average luminance equal to or lower than the predetermined luminance.

In general, optimal filter coefficients are different between (i) a region having a higher luminance and (ii) a region having a lower luminance.

According to the configuration of the present invention, the first prediction image is divided into (i) the region made up of macroblocks having an average luminance higher than the predetermined luminance and (ii) the region made up of macroblocks having an average luminance equal to or lower than the predetermined luminance, and it is possible to set the filter coefficient of the second filter so that a difference between the input image and the first prediction image is minimized for each of the regions.

With the configuration, it is possible to carry out appropriate filtering, even in the case where the regions of the first prediction image are not uniform in luminance.

It is preferable that the filter coefficient setting means sets the filter coefficient of the second filter for a region of the plurality of regions that has an area ratio, with respect to the first prediction image, larger than a predetermined area ratio so that the difference between the first prediction image and the input image is minimized; and the filter coefficient setting means selects, as the filter coefficient of the second filter, a predetermined filter coefficient for a region of the plurality of regions that has an area ratio, with respect to the first prediction image, equal to or smaller than a predetermined area.

In general, the number of samples of prediction residuals (corresponding to the difference), used to determine a filter coefficient, becomes fewer as a size of a region becomes smaller. Under the circumstances, it is difficult to improve prediction accuracy of the prediction image in such a small region. Even if the prediction accuracy can be improved, there is a possibility that, by carrying out adaptive filtering, disadvantageous increase in calculation cost and in code amount required for a filter coefficient surpasses advantageous improvement in encoding efficiency.

According to the configuration, (i) the filter coefficient of the second filter is set for the region out of the plurality of regions which has an area ratio, with respect to the first prediction image, larger than the predetermined area ratio, so that the difference between the first prediction image and the input image is minimized, and (ii) the filter coefficient setting means selects, as the filter coefficient of the second filter, the predetermined filter coefficient for a region out of the plurality of regions which has an area ratio, with respect to the first prediction image, equal to or smaller than the predetermined area. This makes it possible to carry out appropriate filtering, without causing a problem of increase in calculation cost and in code amount of a filter coefficient.

It is preferable that the dividing means divides the first prediction image into (i) a first region made up of partitions referring to an image having a reference image index of zero and (ii) a second region made up of partitions referring to an image having a reference image index which is not zero; and in a case where an area ratio of the second region with respect to the first prediction image is smaller than a predetermined area ratio, (i) the filter coefficient setting means sets the filter coefficient of the second filter for the first region so that a difference between the first prediction image and the input image is minimized and (ii) the second predicting means filters, with use of a predetermined filter coefficient, a reference picture having a reference index of zero, the reference picture being included in the reference image corresponding to the second region.

According to the configuration, in a case where the area ratio of the second region, made up of partitions referring to an image having a reference image index which is not zero, with respect to the first prediction image is smaller than the predetermined area ratio, (i) adaptive filtering is carried out only with respect to the first region made up of partitions referring to an image having a reference image index of zero and (ii) filtering with the use of the predetermined filter coefficient is carried out with respect to the second region. This makes it possible to carry out appropriate filtering, while suppressing calculation cost and an code amount of a filter coefficient.

Moreover, according to the configuration, a reference image index ref_idx serves as an index indicating whether adaptive filtering is to be carried out or nonadaptive filtering is to be carried out with the use of a filter coefficient having an effect of emphasizing an edge.

Therefore, in a case where the reference image index ref_idx = 1 is hardly used, the reference image index ref_idx can be used as an index indicating that nonadaptive filtering is to be carried out. This makes it possible to switch adaptive filtering and nonadaptive filtering, without causing increase in code amount due to additional side information.

Another encoding device of the present invention includes: a first filter configured to act on a plurality of reference images obtained by encoding and reconfiguring an input image; first predicting means for generating a first prediction image by carrying out motion compensation with reference to an output image obtained through the first filter; a second filter configured to act on the plurality of reference images; and second predicting means for generating a second prediction image by carrying out motion compensation with reference to an output image obtained through the second filter; said encoding device encoding residual data indicative of a difference between the input image and the second prediction image, in a case where a reference image, out of the plurality of reference images, belonging to a first reference image list has a weight of contribution to the first prediction image which weight is equal to or heavier than a predetermined weight, the second filter filtering the reference image which belongs to the first reference image list with use of a filter coefficient which has been set so that a difference between the input image and the first prediction image is minimized, and in a case where the reference image belonging to the first reference image list has a weight of contribution to the first prediction image which weight is lighter than the predetermined weight, the second filter filtering a reference image which belongs to a second reference image list with use of a predetermined filter coefficient, the second reference image list being different from the first reference image list.

In general, as a weight of contribution of a reference image becomes smaller with respect to a prediction image, it becomes less advantageous to carry out adaptive filtering on the reference image. In other words, as a weight of contribution of a reference image with respect to a prediction image becomes smaller, it becomes more likely that a disadvantage caused by adaptive filtering, i.e., increase in calculation cost and in code amount required for a filter coefficient, surpasses an advantage brought about by the adaptive filtering, i.e., improvement in encoding efficiency.

According to the configuration, (i) adaptive filtering is carried out on only a reference image whose weight of contribution to the first prediction image is heavier than the predetermined weight and (ii) filtering with the use of the predetermined filter coefficient is carried out on a reference image whose weight of contribution to the first prediction image is lighter than the predetermined weight. This makes it possible to carry out appropriate filtering, without causing disadvantageous increase in calculation cost.

Moreover, according to the configuration, in a case where the reference image belonging to the first reference image list has a weight of contribution to the first prediction image which weight is lighter than the predetermined weight, filtering can be carried out on a reference image which belongs to the second reference image list with use of the predetermined filter coefficient. This allows a reference list number to serve as a flag indicating whether an adaptively obtained filter coefficient or a nonadaptive filter coefficient is to be used. With the configuration of the present invention, it is therefore possible to carry out filtering more appropriately, without causing increase in code amount due to additional side information.

A decoding device of the present invention is a decoding device for decoding encoded data obtained by encoding, together with a filter coefficient group, residual data indicative of a difference between an original image and a prediction image, the decoding device including: filtering means for filtering a reference image so as to generate a filtered reference image, the reference image being generated based on a prediction residual obtained by decoding the residual data, the filtering means having a filter coefficient switchable for each unit region of the reference image; prediction image generating means for generating the prediction image by carrying out motion compensation with respect to the filtered reference image; and filter coefficient selecting means for selecting, for each unit region of the reference image, any of (i) a filter coefficient included in the filter coefficient group and (ii) a predetermined filter coefficient.

According to the decoding device of the present invention thus configured, the decoding device includes (i) the filtering means for filtering the reference image so as to generate the filtered reference image, the reference image being generated based on the prediction residual obtained by decoding the residual data, the filtering means having a filter coefficient switchable for each unit region of the reference image, (ii) the prediction image generating means for generating the prediction image by carrying out motion compensation with respect to the filtered reference image, and (iii) the filter coefficient selecting means for selecting, for each unit region of the reference image, any of (a) a filter coefficient included in the filter coefficient group and (b) a predetermined filter coefficient. This makes it possible to carry out filtering with the use of a more appropriate filter coefficient for each unit region of the reference image.

In the decoding device of the present invention, it is preferable that the filter coefficient selecting means selects any of filter coefficients included in the filter coefficient group, depending on whether or not the unit region of the reference image belongs to a macroblock to which a skip mode is applied.

In general, optimal filter coefficients are different between (i) a macroblock to which the skip mode is applied and (ii) a macroblock to which the skip mode is not applied.

According to the configuration of the present invention, the filter coefficient selecting means can select any of the filter coefficients, which are included in the filter coefficient group, depending on whether or not the unit region of the reference image belongs to a macroblock to which a skip mode is applied. This makes it possible to carry out appropriate filtering, even in a case where the reference image includes (i) macroblocks to which the skip mode is applied and (ii) macroblocks to which the skip mode is not applied.

In the decoding device of the present invention, it is preferable that the filter coefficient selecting means selects any of filter coefficients included in the filter coefficient group, depending on whether or not a reference image index of the reference image is zero.

In general, optimal filter coefficients are different for regions which refer to respective reference pictures having different reference image indexes.

According to the configuration, the filter coefficient selecting means can select any of the filter coefficients included in the filter coefficient group, depending on whether or not a reference image index of the reference image is zero. This makes it possible to carry out appropriate filtering, even in a case where the reference image includes (i) partitions referring to an image having the reference image index of zero and (ii) partitions referring to an image having the reference image index which is not zero.

In the decoding device of the present invention, it is preferable that the filter coefficient selecting means (i) divides the prediction image that is being generated into a plurality of regions in accordance with a predetermined criterion and (ii) selects any of filter coefficients, included in the filter coefficient group, for each of regions of the reference image, which regions correspond to the respective plurality of regions.

According to the configuration, the filter coefficient selecting means (i) can divide the prediction image which is being generated into a plurality of regions in accordance with a predetermined criterion and (ii) can select any of the filter coefficients, included in the filter coefficient group, for each of regions of the reference image, which regions correspond to the respective plurality of regions. This makes it possible to carry out filtering more appropriately.

In the decoding device of the present invention, it is preferable that the filter coefficient selecting means selects a filter coefficient, included in the filter coefficient group, for a region of the reference image which region corresponds to a region out of a plurality of regions of the prediction image that is being generated which region has an area ratio, with respect to the prediction image that is being generated, larger than a predetermined area ratio; and the filter coefficient selecting means selects the predetermined filter coefficient for a region of the reference image which region corresponds to a region out of the plurality of regions of the prediction image that is being generated which region has an area ratio, with respect to the prediction image being generated, equal to or smaller than the predetermined area ratio.

In general, the number of samples of prediction residuals (corresponding to the difference), used by the video encoding device to determine a filter coefficient, becomes fewer as a size of a region becomes smaller. Under the circumstances, it is difficult to improve prediction accuracy of the prediction image in such a small region. Even if the prediction accuracy can be improved, there is a possibility that disadvantageous increase in code amount caused by encoding a filter coefficient which has been adaptively obtained surpasses advantageous improvement in encoding efficiency.

According to the configuration of the present invention, the filter coefficient selecting means selects a filter coefficient, included in the filter coefficient group, for a region of the reference image which region corresponds to a region out of a plurality of regions of the prediction image that is being generated which region has an area ratio, with respect to the prediction image being generated, larger than a predetermined area ratio; and the filter coefficient selecting means selects the predetermined filter coefficient for a region of the reference image which region corresponds to a region out of the plurality of regions of the prediction image that is being generated which region has an area ratio, with respect to the prediction image being generated, equal to or smaller than the predetermined area ratio. This makes it possible to carry out appropriate filtering, without causing a problem of increase in code amount.

In the decoding device of the present invention, it is preferable that, in a case where a region of the prediction image, which region corresponds to a first reference image having a reference image index which is not zero, has an area ratio, with respect to the prediction image, smaller than a predetermined area ratio, the filtering means generates the region of the prediction image by filtering, with use of the predetermined filter coefficient, a region of a second reference image having a reference image index of zero, the region of the second reference image corresponding to the region of the prediction image.

In general, the number of samples of prediction residuals (corresponding to the difference), used by the video encoding device to determine a filter coefficient, becomes fewer as a size of a region becomes smaller. Under the circumstances, it is difficult to improve prediction accuracy of the prediction image in such a small region. Even if the prediction accuracy can be improved, there is a possibility that disadvantageous increase in code amount caused by encoding a filter coefficient which has been adaptively obtained surpasses advantageous improvement in encoding efficiency.

According to the configuration of the present invention, is it possible to carry out appropriate filtering, without causing a problem of increase in code amount.

The configuration allows a reference image index ref_idx which is not zero to serve as a flag indicating that adaptive filtering is to be carried out.

That is, the reference image index ref_idx which is not zero can be used as an index indicating that filtering is to be carried out with the use of a nonadaptive filter coefficient. This makes it possible to switch adaptive filtering and nonadaptive filtering, without causing increase in code amount due to additional side information.

In the decoding device of the present invention, it is preferable that, in a case where a region of the prediction image, which region corresponds to a first reference image having a reference image list number which is not zero, has a weight of contribution to the prediction image which weight is lighter than a predetermined weight, the filtering means generates the region of the prediction image by filtering, with use of the predetermined filter coefficient, a region of a second reference image having a reference image list number of zero, the region of the second reference image corresponding to the region of the prediction image.

In general, as a weight of contribution of a reference image becomes smaller with respect to a prediction image, it becomes more likely that disadvantageous increase in code amount, which is caused by encoding an adaptively obtained filter coefficient, surpasses advantageous improvement in encoding efficiency.

According to the configuration, in a case where the weight of contribution of the reference image, whose list number is not zero, with respect to the prediction image is lighter than the predetermined weight, the filtering means can carry out filtering with the use of the predetermined filter coefficient. This makes it possible to carry out appropriate filtering, without causing disadvantageous increase in code amount.

According to the configuration, it is possible to use a reference image list number as a flag indicating whether an adaptively obtained filter coefficient or a nonadaptive filter coefficient is to be used. The configuration of the present invention can therefore make it possible to carry out filtering more appropriately, without causing increase in code amount due to additional side information.

It is preferable that the decoding device of the present invention further includes, instead of the filter coefficient selecting means, another filter coefficient selecting means for selecting, with reference to a flag contained in the encoded data, (i) any of filter coefficients included in the filter coefficient group and (ii) a region of the reference image to which region the filter coefficient thus selected is to be applied.

According to the configuration, it is possible to carry out filtering, with reference to the flag and with the use of any of filter coefficients included in the filter coefficient group, with respect to each region of the reference image. This makes it possible to carry out appropriate filtering for each region.

In a data structure of encoded data of the present invention, the encoded data is obtained by encoding, together with a filter coefficient group, residual data which is indicative of a difference between an original image and a prediction image which has been generated from the original image; and the filter coefficient group includes a filter coefficient which is selected for each unit region of a reference image, the reference image being generated based on a prediction residual obtained as a result of decoding of the residual data in a decoding device for decoding the encoded data.

The data structure of the encoded data thus configured includes the filter coefficient which is selected for each unit region of the reference image generated based on the prediction residual which is obtained as a result of decoding of the residual data in the decoding device for decoding the encoded data. This allows the decoding device to carry out filtering more appropriately for each unit region of the reference image.

The present invention is not limited to the embodiments, but can be altered by a skilled person in the art within the scope of the claims. An embodiment derived from a proper combination of technical means disclosed in respective different embodiments is also encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Industrial Applicability

The present invention is suitably applicable to (i) a video encoding device for generating encoded data by encoding a video and (ii) a video decoding device for decoding encoded data generated by the use of such a video encoding device.

Reference Signs List

1: Video encoding device (encoding device)
16: Inter-prediction image generating section
16a: Prediction image generating section (first predicting means, second predicting means)
100: Adaptive filter (dividing means, filter coefficient setting means)
17: Motion vector estimating section
2: Video decoding device (decoding device)
100": Adaptive filter (filtering means, filter coefficient selecting means)
26a: Prediction image generating section (prediction image generating means)

**Claims**

1. An encoding device comprising:

a first filter configured to act on a reference image obtained by encoding and reconfiguring an input image;
first predicting means for generating a first prediction image by carrying out motion compensation with reference to an output image obtained through the first filter;
a second filter configured to act on the reference image;
second predicting means for generating a second prediction image by carrying out motion compensation with reference to an output image obtained through the second filter;
dividing means for dividing each of the first prediction image and the input image into a plurality of regions; and
filter coefficient setting means for setting a filter coefficient of the second filter so that a difference between the input image and the first prediction image is minimized for each of the plurality of regions,
said encoding device encoding residual data indicative of a difference between the input image and the second prediction image.

2. The encoding device as set forth in claim 1, wherein:

the dividing means divides the first prediction image into (i) a region made up of macroblocks to which a skip mode is applied and (ii) a region made up of macroblocks to which the skip mode is not applied.

3. The encoding device as set forth in claim 1, wherein:

the dividing means divides the first prediction image into (i) a region made up of partitions referring to an image having a reference image index of zero and (ii) a region made up of partitions referring to an image having a reference image index which is not zero.

4. The encoding device as set forth in claim 1, wherein:

the dividing means includes first dividing means and second dividing means;
the filter coefficient setting means includes first filter coefficient setting means and second filter coefficient setting means;

the first dividing means divides the first prediction image into (i) a first region made up of macroblocks to which a skip mode is applied and (ii) a second region made up of macroblocks to which the skip mode is not applied; the first filter coefficient setting means determines a first preliminary filter coefficient for each of the first region and the second region so that a difference between the first prediction image and the input image is minimized; the second dividing means divides the first prediction image into (i) a third region made up of partitions referring to an image having a reference image index of zero and (ii) a fourth region made up of partitions referring to an image having a reference image index which is not zero; the second filter coefficient setting means determines a second preliminary filter coefficient for each of the third region and the fourth region so that a difference between the first prediction image and the input image is minimized; and one that is higher in encoding efficiency out of the first preliminary filter coefficient and the second preliminary filter coefficient is set to be the filter coefficient of the second filter.

5. The encoding device as set forth in claim 1, wherein:

the dividing means divides the first prediction image into the plurality of regions by allocating each unit region of the first prediction image to a region to which a larger number of macroblocks out of a plurality of macroblocks adjacent to a macroblock including the each unit region belong.

6. The encoding device as set forth in claim 1, wherein:

the dividing means divides the first prediction image into (i) a region made up of macroblocks having an average luminance higher than a predetermined luminance and (ii) a region made up of macroblocks having an average luminance equal to or lower than the predetermined luminance.

7. The encoding device as set forth in claim 1, wherein:

the filter coefficient setting means sets the filter coefficient of the second filter for a region of the plurality of regions that has an area ratio, with respect to the first prediction image, larger than a predetermined area ratio so that the difference between the first prediction image and the input image is minimized; and the filter coefficient setting means selects, as the filter coefficient of the second filter, a predetermined filter coefficient for a region of the plurality of regions that has an area ratio, with respect to the first prediction image, equal to or smaller than a predetermined area.

8. The encoding device as set forth in claim 1, wherein:

the dividing means divides the first prediction image into (i) a first region made up of partitions referring to an image having a reference image index of zero and (ii) a second region made up of partitions referring to an image having a reference image index which is not zero; and in a case where an area ratio of the second region with respect to the first prediction image is smaller than a predetermined area ratio, (i) the filter coefficient setting means sets the filter coefficient of the second filter for the first region so that a difference between the first prediction image and the input image is minimized and (ii) the second predicting means filters, with use of a predetermined filter coefficient, a reference picture having a reference index of zero, the reference picture being included in the reference image corresponding to the second region.

9. The encoding device as set forth in claim 1, wherein:

the filter coefficient setting means determines the filter coefficient of the second filter so that a square error of the filter coefficient is minimized.

10. An encoding device comprising:

a first filter configured to act on a plurality of reference images obtained by encoding and reconfiguring an input image; first predicting means for generating a first prediction image by carrying out motion compensation with reference to an output image obtained through the first filter; a second filter configured to act on the plurality of reference images; and

second predicting means for generating a second prediction image by carrying out motion compensation with reference to an output image obtained through the second filter;

said encoding device encoding residual data indicative of a difference between the input image and the second prediction image,

in a case where a reference image, out of the plurality of reference images, belonging to a first reference image list has a weight of contribution to the first prediction image which weight is equal to or heavier than a predetermined weight, the second filter filtering the reference image which belongs to the first reference image list with use of a filter coefficient which has been set so that a difference between the input image and the first prediction image is minimized, and

in a case where the reference image belonging to the first reference image list has a weight of contribution to the first prediction image which weight is lighter than the predetermined weight, the second filter filtering a reference image which belongs to a second reference image list with use of a predetermined filter coefficient, the second reference image list being different from the first reference image list.

11. A decoding device for decoding encoded data obtained by encoding, together with a filter coefficient group, residual data indicative of a difference between an original image and a prediction image, said decoding device comprising:

filtering means for filtering a reference image so as to generate a filtered reference image, the reference image being generated based on a prediction residual obtained by decoding the residual data, the filtering means having a filter coefficient switchable for each unit region of the reference image;

prediction image generating means for generating the prediction image by carrying out motion compensation with respect to the filtered reference image; and

filter coefficient selecting means for selecting, for each unit region of the reference image, any of (i) a filter coefficient included in the filter coefficient group and (ii) a predetermined filter coefficient.

12. The decoding device as set forth in claim 11, wherein:

the filter coefficient selecting means selects any of filter coefficients included in the filter coefficient group, depending on whether or not the unit region of the reference image belongs to a macroblock to which a skip mode is applied.

13. The decoding device as set forth in claim 11, wherein:

the filter coefficient selecting means selects any of filter coefficients included in the filter coefficient group, depending on whether or not a reference image index of the reference image is zero.

14. The decoding device as set forth in claim 11, wherein:

the filter coefficient selecting means (i) divides the prediction image that is being generated into a plurality of regions in accordance with a predetermined criterion and (ii) selects any of filter coefficients, included in the filter coefficient group, for each of regions of the reference image, which regions correspond to the respective plurality of regions.

15. The decoding device as set forth in claim 11, wherein:

the filter coefficient selecting means selects a filter coefficient, included in the filter coefficient group, for a region of the reference image which region corresponds to a region out of a plurality of regions of the prediction image that is being generated which region has an area ratio, with respect to the prediction image that is being generated, larger than a predetermined area ratio; and

the filter coefficient selecting means selects the predetermined filter coefficient for a region of the reference image which region corresponds to a region out of the plurality of regions of the prediction image that is being generated which region has an area ratio, with respect to the prediction image being generated, equal to or smaller than the predetermined area ratio.

16. The decoding device as set forth in claim 11, wherein:

in a case where a region of the prediction image, which region corresponds to a first reference image having a reference image index which is not zero, has an area ratio, with respect to the prediction image, smaller than a predetermined area ratio,
the filtering means generates the region of the prediction image by filtering, with use of the predetermined filter coefficient, a region of a second reference image having a reference image index of zero, the region of the second reference image corresponding to the region of the prediction image.

17. The decoding device as set forth in claim 11, wherein:

in a case where a region of the prediction image, which region corresponds to a first reference image having a reference image list number which is not zero, has a weight of contribution to the prediction image which weight is lighter than a predetermined weight,
the filtering means generates the region of the prediction image by filtering, with use of the predetermined filter coefficient, a region of a second reference image having a reference image list number of zero, the region of the second reference image corresponding to the region of the prediction image.

18. The decoding device as set forth in claim 11, further comprising, instead of the filter coefficient selecting means, another filter coefficient selecting means for selecting, with reference to a flag contained in the encoded data, (i) any of filter coefficients included in the filter coefficient group and (ii) a region of the reference image to which region the filter coefficient thus selected is to be applied.

19. A data structure of encoded data, wherein:

the encoded data is obtained by encoding, together with a filter coefficient group, residual data which is indicative of a difference between an original image and a prediction image which has been generated from the original image; and
the filter coefficient group includes a filter coefficient which is selected for each unit region of a reference image, the reference image being generated based on a prediction residual obtained as a result of decoding of the residual data in a decoding device for decoding the encoded data.

FIG. 1

EP 2 525 576 A1

FIG. 2

#16                    16

PREDICTION IMAGE
GENERATING SECTION    16a                    #14b

#16'                    100

ADAPTIVE FILTER        #101

#100'    #100

#17    #17'                    17

#1    MOTION VECTOR ESTIMATING SECTION    #17

FIG. 3

```
                    ┌──────────┐
                    │  START   │
                    └──────────┘
                          │
                          ▼
        ┌────────────────────────────────────┐
        │ FILTER WITH USE OF STANDARD FILTER  │  S101
        │            COEFFICIENT              │
        └────────────────────────────────────┘
                          │
                          ▼
        ┌────────────────────────────────────┐
        │        GENERATE MOTION VECTOR       │  S102
        └────────────────────────────────────┘
                          │
                          ▼
        ┌────────────────────────────────────┐
        │         MOTION COMPENSATION         │  S103
        └────────────────────────────────────┘
                          │
                          ▼
        ┌────────────────────────────────────┐
   ┌───▶│        DIVIDE PREDICTED IMAGE       │  S104
   │    └────────────────────────────────────┘
   │                      │
   │                      ▼
   │    ┌────────────────────────────────────┐
   │    │·DETERMINE FILTER COEFFICIENT FOR EACH│  S105
   │    │ REGION                              │
   │    │·FILTER FOR EACH REGION              │
   │    └────────────────────────────────────┘
   │                      │
   │                      ▼
   │    ┌────────────────────────────────────┐
   │    │        GENERATE MOTION VECTOR       │  S106
   │    └────────────────────────────────────┘
   │                      │
   │                      ▼
   │    ┌────────────────────────────────────┐
   └────│         MOTION COMPENSATION         │  S107
        └────────────────────────────────────┘
                          │
                          ▼
                    ┌──────────┐
                    │   END    │
                    └──────────┘
```

FIG. 4

FIG. 5

FIG. 6

ER22' a  FILTER 2
FILTER 1  ER22"  FILTER 1

B  A  #16  C

ER22' b  ER21' a  ER21"  ER21' b

L0, ref_idx=1  L0, ref_idx=0  L1, ref_idx=0
L1, ref_idx=1

FIG. 7

#16'

ER1  ER2

FIG. 8

FILTER 1'

FILTER 1

ER722'

ER712'

A

A

ref_idx=1

ref_idx=0

#16

FIG. 9

L1, ref_idx=1

ER~822' b

FILTER 1'

B

FILTER 1

FILTER 1

FILTER 1

A

A

#16

B

ER~822' a

ER~812' a

ER~812' b

L0, ref_idx=1

L0, ref_idx=0

L1, ref_idx=0

FIG. 10

ER~92'b
FILTER 2
FILTER 1
FILTER 2

B
A
#16
C

ER~91'b
LO, ref_idx=1

ER~91'a
LO, ref_idx=0
L1, ref_idx=1

ER~92'a
L1, ref_idx=0

FIG. 11

L1, ref_idx=1

ER~922"a

FILTER 1'

B

FILTER 1

FILTER 1'

B
A
#16
A

ER~922'b
LO, ref_idx=1

ER~912'a
LO, ref_idx=0

ER~912"b
L1, ref_idx=0

FIG. 12

EP 2 525 576 A1

FIG. 13

#25d    26

#23b →
#23d →

┌─ 100"
ADAPTIVE FILTER

│ #100'''
▼

#25c →
PREDICTION
IMAGE
GENERATING
SECTION    ┐26a    #26 →

FIG. 14

┌ #BS

FC    MB1    MB2    MBN

· · · · · · ·

<table>
<tr><td colspan="2" align="center"><strong>INTERNATIONAL SEARCH REPORT</strong></td><td colspan="2">International application No.<br>PCT/JP2010/073436</td></tr>
</table>

| A. CLASSIFICATION OF SUBJECT MATTER |
|---|
| *H04N7/32*(2006.01)i |
| |
| According to International Patent Classification (IPC) or to both national classification and IPC |

| B. FIELDS SEARCHED |
|---|
| Minimum documentation searched (classification system followed by classification symbols)<br>H04N7/32 |
| |
| Documentation searched other than minimum documentation to the extent that such documents are included in the fields searched<br>Jitsuyo Shinan Koho     1922-1996  Jitsuyo Shinan Toroku Koho  1996-2011<br>Kokai Jitsuyo Shinan Koho  1971-2011  Toroku Jitsuyo Shinan Koho  1994-2011 |
| Electronic data base consulted during the international search (name of data base and, where practicable, search terms used)<br>  |

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2007/114368 A1 (Toshiba Corp.),<br>11 October 2007 (11.10.2007),<br>paragraphs [0042] to [0054], [0153] to [0158];<br>fig. 9A to 10B, 27, 28<br>& US 2009/0087111 A1    & EP 2003897 A2<br>& CA 2045931 A      & NO 20084509 A<br>& HR 20080553 A     & KR 10-2008-0107436 A<br>& CN 101411202 A    & ZA 807977 A<br>& RU 2008138706 A | 11,18,19<br>1-10,12-17 |
| Y | Supervised by Sakae OKUBO, co-edited by Shin'ya KAKUNO, Yoshihiro KIKUCHI, Teruhiko SUZUKI, revised 3rd edition H.264/AVC Kyokasho, 1st edition, Kabushiki Kaisha Impress R&D, 01 January 2009 (01.01.2009), page 330 | 11,18,19 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 March, 2011 (17.03.11) | Date of mailing of the international search report<br>29 March, 2011 (29.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

<table>
<tr><td colspan="2">International application No.</td></tr>
<tr><td colspan="2">PCT/JP2010/073436</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-194617 A  (Sony Corp.),<br>27 August 2009 (27.08.2009),<br>entire text; all drawings<br>& US 2009/0207911 A1 | 1-19 |

Form PCT/ISA/210 (continuation of second sheet) (July 2009)

**EP 2 525 576 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006135376 A